(19) Europäisches Patentamt
European Patent Office
Office européen des brevets

(11) EP 1 482 616 A1

(12) EUROPEAN PATENT APPLICATION
published in accordance with Art. 158(3) EPC

(43) Date of publication:
01.12.2004 Bulletin 2004/49

(51) Int Cl.⁷: H02J 3/38, H02J 3/46,
H01M 8/00, H01M 8/04

(21) Application number: 03710247.2

(22) Date of filing: 05.03.2003

(86) International application number:
PCT/JP2003/002588

(87) International publication number:
WO 2003/075427 (12.09.2003 Gazette 2003/37)

(84) Designated Contracting States:
AT BE BG CH CY CZ DE DK EE ES FI FR GB GR
HU IE IT LI LU MC NL PT RO SE SI SK TR

(30) Priority: 06.03.2002 JP 2002060344

(71) Applicant: MATSUSHITA ELECTRIC INDUSTRIAL
CO., LTD.
Kadoma-shi, Osaka 571-8501 (JP)

(72) Inventors:
• NAGAMITSU, Sachio
Kyoto-shi, Kyoto 612-0846 (JP)
• MATSUI, Masaru
Souraku-gun, Kyoto 619-0232 (JP)
• MATSUBAYASHI, Shigeaki
Ikoma-shi, Nara 630-0243 (JP)

(74) Representative: Grünecker, Kinkeldey,
Stockmair & Schwanhäusser Anwaltssozietät
Maximilianstrasse 58
80538 München (DE)

(54) **SETTING DEVICE OF DISTRIBUTED ENERGY SUPPLY SYSTEM**

(57) Heretofore, in a dispersed energy supplying system, the unit cost of energy generated in houses and the unit rate of energy bought from an electric power company, etc. have been compared, but consideration has never been made of environmental burden.

There are provided a controlling portion 11 of controlling the operation of a fuel cell, a switch 30 of selectively supplying the electric power of the fuel cell or an external electric power into an electric power load, an electric power generation unit cost calculating portion 13 of calculating the electric power generation cost of the fuel cell, an electric rate system storing portion 14 of calculating the cost of a power plant 50 and a dispersed electric power generating apparatus 51, an LCA data storing portion 16 of storing LCA data of the fuel cell, the power plant 50 and the dispersed electric power generating apparatus 51, and a user interface portion 20 of presenting electric power generation cost, external electric power cost and LCA data and allowing the user to determine the controlling operation of the aforementioned controlling portion 11 and/or the selecting operation of the switch 11.

Fig. 1

EP 1 482 616 A1

**EP 1 482 616 A1**

**Description**

Technical Field

The present invention relates to an apparatus of setting a distributed energy supplying system using a means of generating energy from an external energy source such as fuel cell.

Background Art

A fuel cell is an energy-saving system which undergoes chemical reaction of a fuel gas with air to generate electricity and supplies electric power as well as heat generated during the electricity generation as heat energy. The operation of a fuel cell has heretofore generally involved an electric power load follow-up operation that causes the fuel cell to generate electricity in conformance with the amount of electric power consumed by the electric power load and causes electricity to be bought from commercial power line when the consumed amount of electric power exceeds the rated electric generation of the fuel cell.

When the electricity generation of the fuel cell is converged to the target control value by controlling the supplied amount of fuel gas, a time lag on the order of minutes occurs. As a technique of eliminating this time lag there is known a technique involving the preparation of a storage battery which charges electricity when the consumed amount of electric power drops and discharges electricity when the consumed amount of electric power rises, making it possible to keep the amount of electricity generated by the fuel cell constant as much as possible even when the amount of electricity consumed by the electric power load changes and cause the amount of electricity generated by the fuel cell to follow up with the electric power load without delay (see JP-A-6-325774).

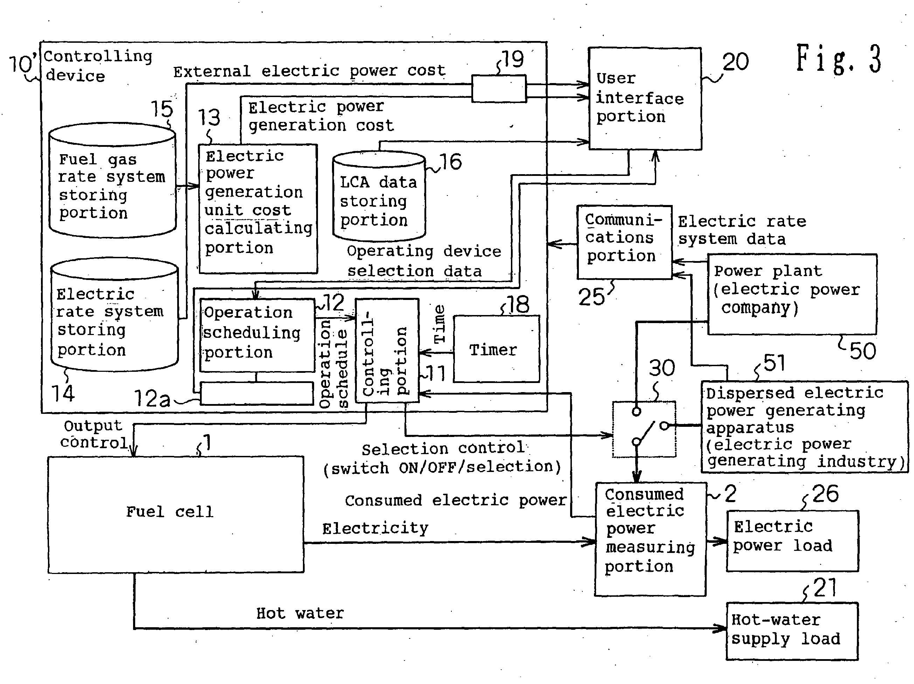

Fig. 3 illustrates a constitutional diagram of an electric power generating system of the related art described in JP-A-6-325774 and a controlling device therefor. In Fig. 3, the reference numeral 101 indicates a fuel cell, the reference numeral 102 indicates an inverter which converts dc electric power which is the output of the fuel cell to ac electric power, and the reference numeral 103 indicates a storage battery which charges with dc electric power. The reference numeral 110 indicates a controlling device having a controlling portion 111. The reference numerals 120 and 121 indicate an electric power load and a hot-water load, respectively, and the reference numerals 131, 132 and 133 each indicate a switch which operates upon the reception of an order from the controlling portion 111. The reference numeral 150 indicates an external electric supply which corresponds to an electric power company.

The operation of this system will be described hereinafter. The fuel cell 101 operates to generate electricity at constant. When the amount of electric power consumed by the electric power load 120 decreases, the switch 131 is then connected to the storage battery 103 so that the storage battery 103 charges with extra electric power. On the contrary, when the amount of electric power consumed by the electric power load 120 increases, the switch 132 is then connected to the storage battery 103 so that the storage battery 103 discharges and supplies electricity to the electric power load 120. When the storage battery 103 is filled with electricity or drains electricity, the controlling portion 111 then outputs a control signal such that the amount of electric power generated by the fuel cell decreases or increases.

Further, the controlling portion 111 gives an instruction of connecting the switch 133 to buy a cheap night electric power from the external electric supply 150 and charge the storage battery 103. The entire disclosure of the above cited JP-A-6-325774 are incorporated herein by reference in its entirety.

Incidentally, the operation of a fuel cell has no economic advantage unless the unit cost of electric power generated by the fuel cell, i.e., the cost of a fuel gas required for the fuel cell to generate a unit amount of electric power is lower than the cost required to buy commercial electric power from an electric power company, etc.

At present, the unit rate of electric power for totally-electrified houses within the area controlled by one electric power company is divided into three time zones in a day, and the rate in the day time zone having the highest unit rate of electric power is not smaller than five times that in the midnight time zone having the lowest unit rate of electric power in summer.

On the other hand, taking into account the cost of fuel gas and the electricity generation efficiency of fuel cell, the unit cost of electric generation of fuel cell is between the unit rate of electric power in the midnight time zone and that in the day time zone. Accordingly, even if a fuel cell 'is operated in a time zone having a low unit rate of electric power as in the midnight, there is no economical advantage.

Further, it is thought that with the recent deregulation of electric market, a plurality of electric power generating industries will start a commercial electric power supply business using their own dispersed electric power generating apparatus. It is therefore presumed that there will be a growing demand for judgment of which electric power industry can provide electricity to economic advantage from the user's standpoint of view.

Further, the aforementioned description has been made with reference to fuel cell by way of example, but it is possible that houses can have an electric power supplying means such as electricity generator installed therein and selectively use it as a result of comparison with electric power bought from the electric power industry.

In the example of Fig. 3, the fuel cell 101 can supply heat generated during electricity generation into the hot-water supply load 121 as hot water. Since the hot-water supply load 121 can be operated by the supply of a city gas, propane gas or the like (not shown) besides by the aforementioned external electric supply 151, heat obtained from the gas bought from these industries and heat obtained from the fuel cell 101 can be compared with each other.

In other words, an energy such as electricity and gas (heat source) does not depend on the supply from conventional infrastructures but can be produced from other kinds of energy sources in various houses. Thus, the user can build a dispersed energy supplying system that allows proper selection and utilization of energy obtained from homemade energy generating means and external energy bought from external electric power industries or gas industries depending on economical efficiency or convenience.

Further, in the case where such a dispersed energy supplying system is utilized or built, consideration should be made not only of selection of energy merely from the economical standpoint of view but also of provision with electric power taking into account what effect the energy consumed has on the environment amidst growing demand for the importance of environmental protection. It is thought that there will be increasing ordinary users who wish so.

To date, however, the supply of an energy such as electric power and gas has never been considered taking into account such an environmental protection.

Further, data on systematic rate of energy such as electricity and gas on the basis of which economical efficiency is evaluated, particularly real time data concerning the cost changing every hour is difficultly available. Accordingly, it has been difficult to control the operation of a dispersed energy supplying system such as fuel cell system and even build and design such a system according to these data.

Disclosure of the Invention

It is an object of the present invention to provide an apparatus of setting dispersed energy supplying system which, taking into account the aforementioned problems, performs assessment of economical efficiency of energy supplied from the exterior and allows ordinary users to select assessment for environmental protection, on the basis of which judgment of optimum operating method or system design can be made. It is another object of the present invention to allow the assessment of economical efficiency to reflect the change of rate system of energy with time zone if any.

It is a further obj ect of the present invention to provide an apparatus of setting a dispersed energy supplying system which can take into account both economical efficiency and environmental protection by automatically realizing judgment of optimum operation schedule or system design even if ordinary users do not make judgment by themselves.

To solve the above problems, a first invention of the present invention lies in an apparatus of setting a dispersed energy supplying system of supplying a generated energy generated from a predetermined energy source by an energy generating means and an externally supplied external energy into a load, comprising:

an energy generation cost calculating means of calculating energy generation cost required to generate the aforementioned generated energy by the aforementioned energy generating means suitable for the aforementioned load;
an external energy supply cost calculating means of calculating supply cost of the aforementioned external energy suitable for the aforementioned load;
an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data; and
an interface means of presenting the aforementioned energy generation cost, the aforementioned external energy supply cost, and the aforementioned first and the second LCA data and allowing the user to set the aforementioned energy generating means and/or the aforementioned external energy supplying means.

Further, a second invention of the present invention lies in an apparatus of setting a distributed energy supplying system of supplying a generated energy generated from a predetermined energy source by an energy generating means and an externally supplied external energy into a load, comprising:

an energy generation cost calculating means of calculating energy generation cost required to generate the aforementioned generated energy by the aforementioned energy generating means suitable for the aforementioned load;
an external energy supply cost calculating means of calculating supply cost of the aforementioned external energy suitable for the aforementioned load;
an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data;

a comparing means of performing at least one of the comparison of the aforementioned energy generation cost and/or the aforementioned external energy supply cost and the comparison of the aforementioned first LCA data and/or the aforementioned second LCA data; and

an interface means of presenting the results of comparison by the aforementioned comparing means and remaining data which have not been compared by the aforementioned comparing means and allowing the user to set the aforementioned energy generating means and/or the aforementioned external energy supplying means.

Moreover, a third invention of the present invention lies in an apparatus of setting a distributed energy supplying system of supplying a generated energy generated from a predetermined energy source by an energy generating means and an externally supplied external energy into a load, comprising:

an energy generation cost calculating means of calculating energy generation cost required to generate the aforementioned generated energy by the aforementioned energy generating means suitable for the aforementioned load;

an external energy supply cost calculating means of calculating supply cost of the aforementioned external energy suitable for the aforementioned load;

an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data; and

a setting means of setting the aforementioned energy generating means and/or the aforementioned external energy supplying means on the basis of at least one of the aforementioned energy generation cost and first LCA data and the aforementioned external energy supply cost and second LCA data.

Further, a fourth invention of the present invention lies in the apparatus of setting a dispersed energy supplying system of any one of the first to the third inventions of the present invention, wherein there further comprises a set content storage means of storing the aforementioned contents of setting and the aforementioned interface means or setting means is capable of displaying the aforementioned stored contents of setting.

Moreover, a fifth invention of the present invention lies in the apparatus of setting a dispersed energy supplying system of any one of the first to the third inventions of the present invention, wherein the aforementioned setting is to select which of the aforementioned energy generating means or the aforementioned external energy is used to supply energy into the aforementioned load in the operation of the aforementioned dispersed energy supplying system.

Further, a sixth invention of the present invention lies in the apparatus of setting a dispersed energy supplying system of any one of the first to the third inventions of the present invention, wherein the aforementioned setting is to select which one of a plurality of the aforementioned energy generating means is used to supply energy into the aforementioned load in the operation of the aforementioned dispersed energy supplying system.

Moreover, a seventh invention of the present invention lies in the apparatus of setting a dispersed energy supplying system of the first invention of the present invention, wherein the aforementioned setting is to select which one of a plurality of the aforementioned external energies is supplied into the aforementioned load in the operation of the aforementioned dispersed energy supplying system.

Further, an eighth invention of the present invention lies in the apparatus of setting a dispersed energy supplying system of any one of the first to the third inventions of the present invention, wherein the aforementioned setting is to select the aforementioned energy generating means or the aforementioned external energy capable of supplying energy into the aforementioned load in the construction of the aforementioned distributed energy supplying system.

Moreover, a ninth invention of the present invention lies in the apparatus of setting a dispersed energy supplying system of any one of the first to the third inventions of the present invention, wherein the aforementioned setting is to select the aforementioned energy generating means capable of supplying energy into the aforementioned load in the construction of the aforementioned dispersed energy supplying system.

Further, a tenth invention of the present invention lies in the apparatus of setting a dispersed energy supplying system of any one of the first to the third inventions of the present invention, wherein the aforementioned setting is to select the aforementioned external energy capable of supplying energy into the aforementioned load in the construction of the aforementioned dispersed energy supplying system.

Moreover, an eleventh invention of the present invention lies in the apparatus of setting a dispersed energy supplying system of the third invention of the present invention, wherein the aforementioned setting means performs at least one of the comparison of the aforementioned energy generation cost and/or the aforementioned external energy supply cost and the comparison of the aforementioned first LCA data and/or the aforementioned second LCA data, and then performs the aforementioned setting, if one of two comparisons shows a difference falling within a predetermined range, on the basis of the results of the other, or, if the aforementioned difference of the comparison exceeds the aforementioned predetermined range, on the basis of the aforementioned difference of the comparison.

Further, a twelfth invention of the present invention lies in the apparatus of setting a dispersed energy supplying system of the third invention of the present invention, wherein the aforementioned setting means performs at least one of the comparison of the aforementioned energy generation cost and/or the aforementioned external energy supply cost and the comparison of the aforementioned first LCA data and/or the aforementioned second LCA data, converts the other data which have not been subjected to comparison according to a predetermined coefficient based on the aforementioned comparison, performs the comparison of the aforementioned data thus converted, and then performs the aforementioned setting on the basis of the results of the comparison.

Moreover, a thirteenth invention of the present invention lies in the apparatus of setting a dispersed energy supplying system of the third invention of the present invention, wherein the setting means performs the comparison of the aforementioned energy generation cost and/or the aforementioned external energy supply cost with the aforementioned first LCA data and/or the aforementioned second LCA data upon reception of a weighted factor determined by the user.

Further, a fourteenth invention of the present invention lies in the apparatus of setting a dispersed energy supplying system of the thirteenth invention of the present invention, wherein the aforementioned weighted factor can be the same for a plurality of LCA data or respectively different for whole or part of the plurality of LCA data.

Moreover, a fifteenth invention of the present invention lies in the apparatus of setting a dispersed energy supplying system of the twelfth or the thirteenth invention of the present invention, wherein the aforementioned setting means determines the aforementioned weighted factor on the basis of the aforementioned comparison.

Further, a sixteenth invention of the present invention lies in the apparatus of setting a dispersed energy supplying system of any one of the first to the third inventions of the present invention, which further comprises an LCA data calculating means of calculating the aforementioned first LDA data and the aforementioned second LCA data.

Moreover, a seventeenth invention of the present invention lies in the apparatus of setting a dispersed energy supplying system of the sixteenth invention of the present invention, wherein the aforementioned external energy supply cost calculating means and the aforementioned LCA data calculating means are provided in a server on a network.

Further, an eighteenth invention of the present invention lies in the apparatus of setting a dispersed energy supplying system of the third invention of the present invention, wherein the aforementioned setting means is provided in a server on a network.

Moreover, a nineteenth invention of the present invention lies in the apparatus of setting a dispersed energy supplying system of any one of the first to the third inventions of the present invention, further comprising an energy consumption measuring means of measuring the energy consumption of the aforementioned load, wherein the aforementioned energy generation cost calculating means comprises an energy source rate system storing means of storing the rate system of the aforementioned predetermined energy source and an energy generation unit cost calculating means comprising a performance table containing data of the aforementioned energy generating means concerning the capacity of generating energy per unit amount of the aforementioned predetermined energy source which obtains an energy source unit rate from the aforementioned energy source rate system storing means and calculates the unit cost per unit energy generation of the aforementioned energy generating means by reference to the aforementioned performance table, and the aforementioned external energy supply cost calculating means comprises an external energy rate system storing means of storing the rate system of the aforementioned external energy.

Further, a twentieth invention of the present invention lies in the apparatus of setting a dispersed energy supplying system of any one of the first to the third inventions of the present invention, wherein the aforementioned energy generating means is a fuel cell.

Moreover, a twenty first invention of the present invention lies in the apparatus of setting a dispersed energy supplying system of any one of the first to the third inventions of the present invention, wherein the aforementioned energy generating means is a $CO_2$ heat pump.

Further, a twenty second invention of the present invention lies in the apparatus of setting a dispersed energy supplying system of the any one of the first to the third inventions of the present invention, wherein the aforementioned external energy contains at least an electric power supplied by an electric power industry.

Moreover, a twenty third invention of the present invention lies in the apparatus of setting a dispersed energy supplying system of any one of the first to the third inventions of the present invention, wherein the aforementioned external energy contains at least gas supplied by a gas industry.

Further, a twenty fourth invention of the present invention lies in a distributed energy supplying system comprising a setting means for distributed energy supplying system of any one of the first to third inventions of the present invention and an energy generating means of generating an energy to be supplied into a load from a predetermined energy source.

Moreover, a twenty fifth invention of the present invention lies in a method of setting a distributed energy supplying system of supplying a generated energy generated from a predetermined energy source by an energy generating means and an externally supplied external energy into a load, comprising:

an energy generation cost calculating step of calculating energy generation cost required to generate the aforementioned generated energy by the aforementioned energy generating means suitable for the aforementioned load;
an external energy supply cost calculating step of calculating supply cost of the aforementioned external energy suitable for the aforementioned load;
an LCA data storing step of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data; and
an interfacing step of presenting the aforementioned energy generation cost, the aforementioned external energy supply cost and the aforementioned first and second LCA data and allowing the user to set the aforementioned energy generating means and/or the aforementioned external energy supplying means.

Further, a twenty sixth invention of the'present invention lies in a method of setting a distributed energy supplying system of supplying a generated energy generated from a predetermined energy source by an energy generating means and an externally supplied external energy into a load, comprising:

an energy generation cost calculating step of calculating energy generation cost required to generate the aforementioned generated energy by the aforementioned energy generating means suitable for the aforementioned load;
an external energy supply cost calculating step of calculating supply cost of the aforementioned external energy suitable for the aforementioned load;
an LCA data storing step of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data;
a comparing step of performing at least one of the comparison of the aforementioned energy generation cost and/ or the aforementioned external energy supply cost and the comparison of the aforementioned first LCA data and/ or the aforementioned second LCA data; and
an interfacing step of presenting the results of comparison by the aforementioned comparing means and remaining data which have not been compared by the aforementioned comparing means and allowing the user to set the aforementioned energy generating means and/or the aforementioned external energy supplying means.

Moreover, a twenty seventh invention of the present invention lies in a method of setting a distributed energy supplying system of supplying a generated energy generated from a predetermined energy source by an energy generating means and an externally supplied external energy into a load, comprising:

an energy generation cost calculating step of calculating energy generation cost required to generate the aforementioned generated energy by the aforementioned energy generating means suitable for the aforementioned load;
an external energy supply cost calculating step of calculating supply cost of the aforementioned external energy suitable for the aforementioned load;
an LCA data storing step of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data; and
a setting step of setting the aforementioned energy generating means and/or the aforementioned external energy supplying means on the basis of at least one of the aforementioned energy generation cost and first LCA data and the aforementioned external energy supply cost and second LCA data.

Further, a twenty eighth invention of the present invention lies in a program of allowing a computer to function as an energy generation cost calculating means of calculating energy generation cost required for the aforementioned energy generating means to generate the aforementioned generated energy suitable for the aforementioned load, an external energy supply cost calculating means of calculating supply cost of the aforementioned external energy suitable for the aforementioned load, an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data and an interface means of presenting the aforementioned energy generation cost, the aforementioned external energy supply cost and the aforementioned first and second LCA data and allowing the user to set the aforementioned energy generating means and/or the aforementioned external energy supplying means in an apparatus of setting a distributed energy supplying system of the first invention of the present invention.

Moreover, a twenty ninth invention of the present invention lies in a program of allowing a computer to function as an energy generation cost calculating means of calculating energy generation cost required for the aforementioned energy generating means to generate the aforementioned generated energy suitable for the aforementioned load, an external energy supply cost calculating means of calculating supply cost of the aforementioned external energy suitable for the aforementioned load, an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data, a comparing means of performing at least one of the comparison of the aforementioned energy generation cost and/or the aforementioned external energy supply cost and the comparison of the aforementioned first LCA data and/or the aforementioned second LCA data and an interface means of presenting the results of comparison by the aforementioned comparing means and remaining data which have not been compared by the aforementioned comparing means and allowing the user to set the aforementioned energy generating means and/or the aforementioned external energy supplying means in an apparatus of setting a distributed energy supplying system of the second invention of the present invention.

Further, a thirtieth invention of the present invention invention lies in a program of allowing a computer to function as an energy generation cost calculating means of calculating energy generation cost required for the aforementioned energy generating means to generate the aforementioned generated energy suitable for the aforementioned load, an external energy supply cost calculating means of calculating supply cost of the aforementioned external energy suitable for the aforementioned load, an LCA data storage means of storing an environmental burden generated at whole or part of the steps of producing, operating and discarding the aforementioned energy generating means as a first life cycle assessment (LCA) data and an environmental burden generated at whole or part of the steps of producing, operating and discarding facilities of supplying the aforementioned external energy as a second LCA data and a setting means of setting the aforementioned energy generating means and/or the aforementioned external energy supplying means on the basis of at least one of the aforementioned energy generation cost and first LCA data and the aforementioned external energy supply cost and second LCA data in an apparatus of setting a distributed energy supplying system of the third invention of the present invention.

Moreover, a thirty first invention of the present invention lies in a recording medium having a program of any one of the twenty eighth to thirtieth inventions of the present invention supported thereon capable of being processed by a computer.

The present invention described above concerns, by way of example, a fuel cell system which generates electric power and heat from a fuel gas and air and then supplies them to an electric power load and a heat load, respectively, comprising a electric power consumption measuring portion of measuring the electric power consumption of the aforementioned electric power load, a fuel gas rate system storing portion of storing the rate system of fuel gas, an electric rate system storing portion for storing the electric rate system, an electric power generation unit cost calculating portion of obtaining fuel gas unit cost from the aforementioned fuel gas rate system storing portion and calculating the unit cost per unit energy generation of the aforementioned fuel cell by reference to a performance table of the aforementioned fuel cell, an LCA data storing portion for storing the life cycle cost concerning a plurality of dispersed electric power generating apparatus, including the aforementioned fuel cell system, or the power plant of an electric power company, a user interface portion capable of presenting the unit cost of electric power generation calculated by the aforementioned electric power generation calculating portion and the life cycle cost of the aforementioned LCA data storing portion at the same time and inputting an operating apparatus selection data for selecting the operating apparatus to be used from the aforementioned dispersed electric power generating apparatus or the aforementioned power plant, an operation scheduling portion of dividing one day into a high electric rate time zone at which the aforementioned electric power rate unit cost is higher than the aforementioned electric power generation unit cost, an equivalent time zone at which the aforementioned electric power rate unit cost is equivalent to the aforementioned electric power generation unit cost and a low electric rate time zone at which the aforementioned electric power rate unit cost is lower than the aforementioned electric power generation unit cost concerning the operation scheduleof fuel cell system, including the selection and control of the aforementioned dispersed electric power generating apparatus or the aforementioned power plant to be selected on the basis of the aforementioned operating apparatus selection data from the aforementioned user interface portion and predetermining the operation schedule so as to operate the aforementioned fuel cell according to the electric power consumption of the aforementioned electric power load in the aforementioned high electric rate time zone or suspend the operation of the fuel cell or operate the fuel cell with the minimum capacity in the low electric rate time zone, and a controlling portion of controlling the electric output of the aforementioned fuel cell system according to the selection and control of the external electric power on the basis of the aforementioned operating apparatus selection data from the user interface portion or the operation schedule.

Further, fuel cell system which generates electric power and heat from a fuel gas and air and then supplies them to an electric power load and a heat load, respectively, comprising a electric power consumption measuring portion of measuring the electric power consumption of the aforementioned electric power load, a fuel gas rate system storing portion of storing the rate system of fuel gas, an electric rate system storing portion for storing electric rate system, an electric power generation unit cost calculating portion of obtaining fuel gas unit cost from the aforementioned fuel gas rate system storing portion and calculating the unit cost per unit energy generation of the aforementioned fuel cell by reference to a performance table of the aforementioned fuel cell, an LCA data storing portion for storing the life cycle cost concerning a plurality of dispersed electric power generating apparatus, including the aforementioned fuel cell system, or the power plant of an electric power company, an operating method judging/storing portion of receiving and storing the aforementioned operating method judgment data from a service industry (ISP) which operates to prepare/provide optimum operating method judgment data on the basis of electric rate system data or life cycle cost data of the aforementioned dispersed electric power generating apparatus or the aforementioned power plant via a communications portion receiving the aforementioned operating method judgment data, an operation scheduling portion of determining the operation schedule of the fuel cell system, including the selection and control of the aforementioned dispersed electric power generating apparatus or the aforementioned power plant, from the electric power unit cost calculated by the aforementioned electric power generation calculating portion, the life cycle cost of the aforementioned LCA data storing portion, the electric rate system data of the aforementioned electric rate system storing portion and the operating method judgment data of the aforementioned operating method judgment data storing portion, and a controlling portion of controlling the electric output of the aforementioned fuel cell system according to the selection and control of the external electric power on the basis of the aforementioned operating apparatus selection data or the operation schedule.


Brief Description of the Drawings

Fig. 1 is a diagram illustrating a configuration of a fuel cell system according to the mode 1 for carrying out the present invention and a controlling device therefor.
Fig. 2 (a) is a diagram illustrating an example of display of a user interface portion 20 and Fig. 2 (b) is a diagram illustrating another example of display of the user interface portion 20.
Fig. 3 is a diagram illustrating another configuration of the fuel cell system according to the mode 1 for carrying out the present invention and the controlling device therefor.
Fig. 4 is a diagram illustrating a configuration of a fuel cell system according to the mode 2 for carrying out the present invention and a controlling device therefor.
Fig. 5 is a diagram illustrating the flow chart of operating order of ISP100 according to the mode 2 for carrying out the present invention.
Fig. 6 is a diagram illustrating the flow chart of another example of operating order of ISP100 according to the mode 2 for carrying out the present invention.
Fig. 7 is a constitutional diagram of a related art technique described in JP-A-6-325774.
Fig. 8 is a diagram illustrating other configuration of the mode 1 for carrying out the present invention.
Fig. 9 is a diagram illustrating further configuration of the mode 1 for carrying out the present invention.
Fig. 10 is a diagram illustrating still further configuration of the mode 1 for carrying out the present invention.
Fig. 11 is a diagram illustrating a configuration of the mode 3 for carrying out the present invention.
Fig. 12 is a diagram illustrating another example of the user interface portion 20 according to the mode 1 for carrying out the present invention.
Fig. 13 is a diagram illustrating another example of operation schedule obtained according to the mode 1 for carrying out the present invention.

(Description of the Reference Numerals and Signs)

| | |
|---|---|
| 1 | Fuel cell |
| 2 | Electric power consumption measuring portion |
| 10, 10', 10" | Controlling device |
| 11 | Controlling portion |
| 12 | Operation scheduling portion |
| 12a | Operation scheduling portion |
| 13 | Electric power generation unit cost calculating portion |
| 14 | Electric rate system storing portion |
| 15 | Fuel gas rate system storing portion |
| 16 | LCA data storing portion |
| 17 | Operating method judgment data storing portion |
| 18 | Timer |
| 19 | Comparing means |
| 20 | User interface portion |
| 21 | Hot-water supply load |
| 25 | Communications portion |
| 26 | Electric power load |
| 30 | Switch |
| 50 | Power plant |
| 51 | Dispersed electric power generating apparatus |

Best Mode for Carrying Out the Invention

Embodiments of implementation of the present invention will be described in connection with the drawings.

(First embodiment)

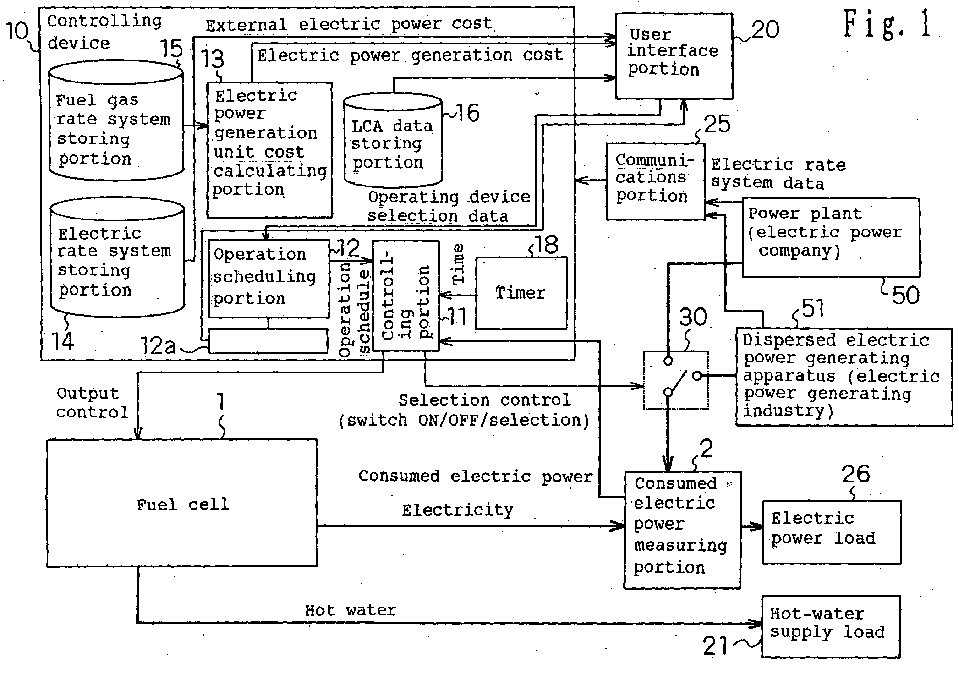

Fig. 1 is a constitutional diagram illustrating a configuration of a fuel cell system according to the first embodiment of implementation of the present invention and a controlling device therefor. In Fig. 1, the reference numeral 1 indicates a fuel cell and the reference numeral 2 indicates an electric power consumption measuring portion comprising an electric power sensor for measuring the electric power consumption of the electric power load 26 incorporated therein. The reference numeral 30 indicates a switch required to use the power plant 50 as an external electric supply or use electricity from the dispersed electric power generating apparatus 51. The power plant 50 means an electric power company or the like and the dispersed electric power generating apparatus 51 means other electric power generating industry, i.e., industry that supplies and sells commercial electric power. The reference numeral 21 is a hot-water supply load that utilizes heat outputted by the fuel cell 1.

The reference numeral 10 indicates a controlling device comprising a controlling portion 11, an operation scheduling portion 12, an operation schedule storing portion 12a, an electric power generation unit cost calculating portion 13, an electric rate system storing portion 14, a fuel gas rate system storing portion 15, an LCA data storing portion 16 and a timer 18. The electric rate system storing portion 14 and the fuel gas rate system storing portion 15 store electric rate unit cost and fuel gas rate unit cost every certain time zone per day, respectively. The electric power generation unit cost calculating portion 13, if the operating capacity of the fuel cell 1 is selected, keeps a performance table providing the energy efficiency of the fuel cell 1 represented by the fuel gas input energy, the electric power generation efficiency and the hot-water efficiency and calculates an electric power generation unit cost which is the cost required for the fuel cell 1 to generate unit electric power. The reference numeral 20 indicates a user interface portion comprising an input screen that enables the user of the fuel cell 1 to make free selection/determination of which electric power can be best used from the standpoint of economical efficiency or environmental protection from the electric power unit cost and the electric rate and LCA data. The operation scheduling portion 12 determines the operation schedule of the fuel cell 1 by the operating apparatus selection data from the user interface portion 20. The controlling portion 11 operates the fuel cell 1 according to the operation schedule determined by the operation scheduling portion 12 and obtains the current time from the timer 18 to control the electric power output of the fuel cell 1 or operate the switch 30.

The description of the operation of the present embodiment of implementation of the invention will be made hereinafter with the description of an embodiment of implementation of the method of setting a dispersed energy supplying system of the present invention.

Firstly, in the electric power generation unit cost calculating portion 13, a fuel gas rate system is obtained from the fuel gas rate system storing portion 15, the electric power unit cost of the fuel cell 1 is calculated from the unit cost of fuel gas and the energy efficiency of the fuel cell, and the electric power unit cost is then outputted to the user interface portion 20 as an electric power generation cost. At present, the unit cost of fuel gas does not change from time zone to time zone in one day, and there is only one fuel gas unit cost used to determine the operation schedule of the fuel cell 1. As the energy efficiency there is used a value estimated and calculated from the operating conditions in the case where the fuel cell 1 is operated.

Subsequently, from the electric rate system storing portion 14 is outputted the electric power generation unit cost of the power plant 50 and the dispersed electric power generating apparatus 51 stored therein to the user interface portion 20 as external electric power generation cost.

On the other hand, LCA data stored in the LCA data storing portion 16 is normally data obtained by measuring the amount of resources consumed and discharged at all steps concerning the production, use and disposal of industrial products and quantifying the effect thereof on the environment. This LCA makes it possible to quantitatively treat the burden of the consumption of energy or the use of products on the environment (environmental burden). The calculation of LCA requires data on the consumption of resources and energy or discharged materials at a number of steps between the excavation of resources and the disposal of products.

In order to calculate LCA data in the fuel cell system of the present embodiment of implementation of the invention, the environmental burden during the production steps and resources (including fuel such as fuel as used in the fuel cell 1, materials used to prepare the fuel cell main body, various resources and materials used to build the power plant 50) required for the development and production of each of the fuel cell 1, the power plant 50 and the dispersed electric power generating apparatus 51 are used as data.

Also, the environmental burden of energy consumption used for the sale andbusiness of the fuel cell 1 and the operation of the power plant 50 and the dispersed electric power generation industry 51 (e.g., what energy and how much the power plant 50 and the dispersed electric power generating apparatus 51 use to make electric power generation) is also used as data.

Further, the environmental burden of energy required for the disposal/recycling of gas consumed and discharged, low temperature water used and the fuel cell 1 paid off when a fuel cell system of the present embodiment of implementation of the invention is operated at houses and the power plant 50 and the dispersed electric power generating apparatus 51 is also used as data.

Here, Table 1 shows a specific example of LCA data.

(Table 1)

| Electric power supply | Fuel Cell | | Atomic power plant | | Thermoelectric power plant | |
|---|---|---|---|---|---|---|
| LCA | Evaluation A | Evaluation B | Evaluation A | Evaluation B | Evaluation A | Evaluation B |
| During production | · $CO_2$ · Heavy metal (per house) | · Global warming · Exhaustion of resources | · $CO_2$ ·Radioactive material (per house) | · Global warming · Atmospheric pollution | · $CO_2$ (per house) | · Global warming |
| During use (operation) | · $CO_2$ (per house) | · Global warming | ·Radioactive material (per house) | ·Atmospheric pollution | · $CO_2$ · Harmful oxides ($NO_x$, $SO_x$) (per house) | · Global warming · Atmospheric pollution |
| During disposal (regeneration) | · $CO_2$ · Heavy metal (per house) | · Global warming · Exhaustion of resources | · $CO_2$ ·Radioactive material (per house) | · Global warming · Atmospheric pollution | · $CO_2$ (per house) | · Global warming |

In Table 1, "Evaluation A" indicates an inventory assessment. The inventory assessment is data obtained by quantifying chemical materials facilities of the target of LCA measurement which are directly discharged from or chemical materials discharged during the production or disposal of these facilities and is represented by units such as weight (mg) and volume (cc). $CO_2$ emission is mainly used, but other chemical materials may be properly quantified depending on the circumstances. For example, a part of LCA data by inventory assessment in the case of fuel cell is the amount of heavy metal and carbon dioxide ($CO_2$) discharged at the step of producing a fuel cell. Other examples of materials to be used in inventory assessment include harmful oxides such as $NO_x$ and $SO_x$, radioactive materials such as uranium, greenhouse gases such as methane and ozone layer-destroying substances such as Freon.

On the other hand, in the case of atomic power plant or thermoelectric power plant, materials directly discharged from the facilities during the production, operation and disposal of the entire facilities or chemical materials discharged to the exterior during the production and disposal of the facilities, including due to discharge risk by accident or the like, are quantified to obtain inventory assessment. However, for the comparison with fuel cell, etc., as the quantified amount there is used a value obtained by dividing the measurements by the number of houses to which the facilities supply electric power. Referring to fuel cell, since there can be proposed a case where one fuel cell is used at one house or a case where one fuel cell is owned jointly by a housing complex, the inventory assessment per house using a fuel cell and the inventory assessment per house to which an atomic power plant or thermoelectric power plant supplies electric power are shown in comparison with each other in Table 1.

Next, "Evaluation B" indicates an impact assessment. The impact assessment is an index predetermined on the basis of, e.g., enterprises' or users' subj ective point of viewwherein a single or a plurality of inventory assessments are used as parameters and there have no specific definitions at present. This index makes it easy for users to make intuitive understanding of environmental effect.

As mentioned above, the inventory assessment involves quantification of chemical materials, but it is difficult for users having no expert knowledge to estimate the degree of environmental effect from the amount of these chemical materials.

Therefore, for the convenience of users, the impact assessment is used as an index giving intuitive and concrete representation of environmental effect wherein as a parameter indicating the degree of environmental effect there is used an inventory assessment.

A part of LCA data by impact assessment in the case of fuel cell for example is to set the effect of the use of a fuel cell per house on the global warming as a warming index. How the inventory assessment should be selected as parameter may be arbitrarily determined by the user. An example of the warming index is to use $CO_2$ emission and hydrocarbon emission. Table 1 shows the case where as a warming index there is used $CO_2$ emission alone.

As other examples of impact assessment there may be set an acidification index indicating the acidity of the atmosphere , an atmospheric pollution index indicating the degree of pollution of the atmosphere, a resource exhaustion index indicating the degree of exhaustion of resources.

In the case of atomic power plant or thermoelectric power plant, too, impact assessment is similarly conducted.

Incidentally, taking the time of operation of atomic power plant by way of example, an atomic power plant emits no $CO_2$ during its operation. Therefore, if the warming index is set according to the same method as in fuel cell, its value cannot be measured.

However, in the inventory assessment during operation, an atomic power plant discharges radioactive materials. Paying their attention to this fact, users can make impact assessment (atmospheric pollution in the example of Table 1) with this inventory assessment as parameter, making it possible to make fair and intuitive comparison of LCA. In other words, the comparison of LCA using a plurality of impact assessments exerts an effect of correcting the impact assessment for deviation.

As in the case of inventory assessment, the impact assessment is shown in Table 1 as contrast of the use of fuel cell per house with the use of atomic power plant and thermoelectric power plant per house.

The aforementioned LCA data is divisionally stored in LCA data storing portion 16 as first LCA data concerning the fuel cell 1 and second LCA data concerning each of the power plant 50 and the dispersed electric power generating apparatus 51. In the following description, the power plant 50 corresponds to the atomic power plant in Table 1 and the dispersed electric power generating apparatus 51 corresponds to the thermoelectric power plant in Table 1.

In the user interface portion 20, LCA data is presented as degree of environmental effect in addition to economical efficiency presented as electric power generation cost and external electric power cost.

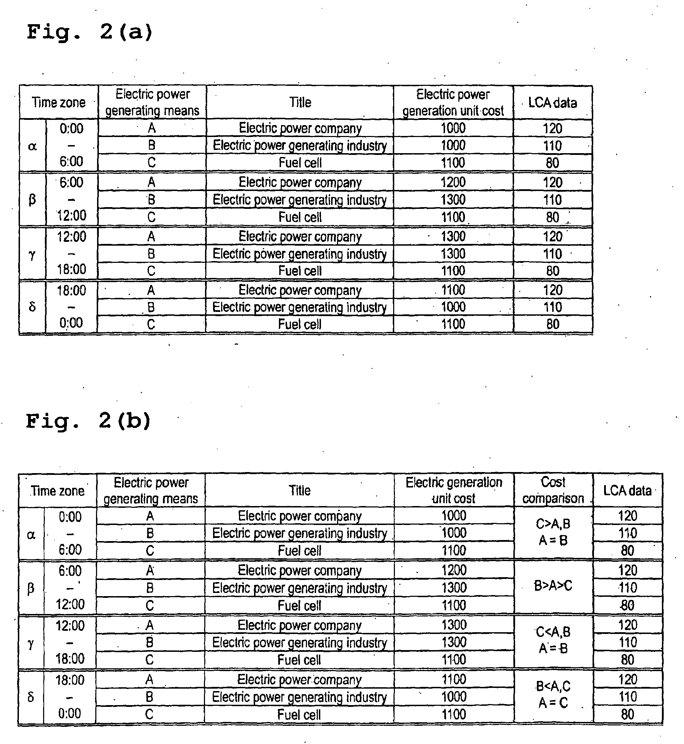

In Fig. 2 (a) , an example of the user interface portion 20 is typically illustrated. In the user interface portion 20 shown in Fig. 2 (a), the electric power generation cost, the external cost and LCA data are shown every unit defined by dividing one day into four time zones. As LCA data there was used only impact assessment. However, the definition of numeral values is determined by users, enterprises, etc. and thus is not limited to the present example.

As described with reference to the related art, the power plant 50 and the dispersed electric power generating apparatus 51 vary in electric power unit cost from operating time zone to operating time zone, and, in the user interface portion 20, the electric power unit cost (external electric power cost) of the power plant 50 (corresponding to "electric power generating means A/electric power company" in Fig. 2(a)) and the dispersed electric power generating apparatus 51 (corresponding to "electric power generating means B/electric power generating industry" in Fig. 2 (a)) is displayed every varying time zone. Further, as mentioned above, the electric power unit cost (electric power generation cost) of the fuel cell 1 (corresponding to "electric power generating means C/fuel cell" in Fig. 2 (a)) remains constant regardless of time zone.

Moreover, it is arranged such that LCA data on each of the various electric power generating means A to C are displayed as index.

The user determines as an operation schedule which is to be used among the fuel cell 1, the power plant 50 and the dispersed electric power generating apparatus 51 in a desired time zone during which the fuel cell system is operated on the basis of various data set forth in this table and then inputs it to the user interface portion 20.

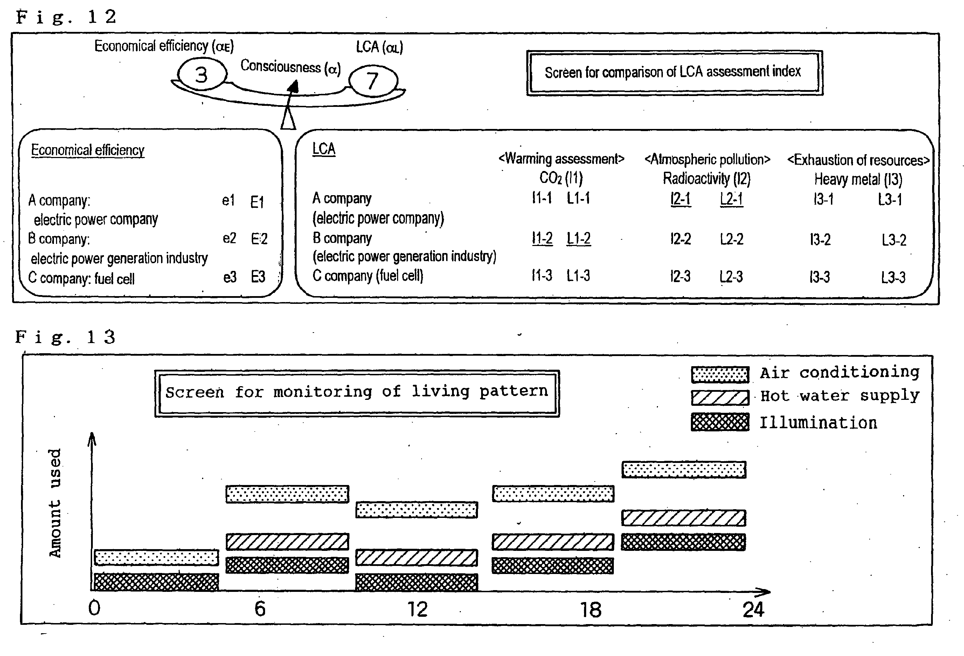

In Fig. 13, an example of the operation schedule of the fuel cell 1 is shown. As shown in this figure, the electric power per day of various loads which can be operated by a fuel cell system such as air conditioning, hot-water supply and illumination as in the electric power load 20 and the hot-water supply load 21 varies from time zone to time zone in one day. The data of this variation can be obtained, e.g., by network-connecting the various loads. Further, such an operation schedule is displayed on the user interface portion 20.

In general, it is considered a most possible case that the user would use the cheapest electric power generating means simply from an economical standpoint by judging from these data. In this case, the operation schedule is very simple, and the user merely selects among the fuel cell 1, the power plant 50 and the dispersed electric power generating apparatus 51 such that the cheapest electric power generating means can be operated in the respective operating time zone of the system.

However, the spread of the fuel cell system, which has been developed and marketed originally from the standpoint of environmental protection, only for economic satisfaction of the user should be avoided also from the standpoint of state policy. In other words, it is desirable that satisfaction in environmental contribution can be provided also to the user, resulting in the wide spread of the fuel cell system as a merchandise which is friendly also to the global environment.

To this end, in the present embodiment of implementation of the invention, satisfaction in environmental contribution in addition to economical efficiency is shown by a definite quantitative indication such as LCA data, making it possible for the user to consider the contribution to environmental protection on the basis of LCA data when selecting electric power means. In other words, screen display is conducted such that the user can freely select and set various electric power generating means on the basis of LCA data presented in addition to the electric power unit cost and the electric rate.

In Fig. 12, another example of display of the user interface portion 20 is typically shown. In the user interface portion 20 shown in Fig. 12, economical efficiency including the electric power cost and the external cost in block and LCA data are shown in separate windows and indicate weighted factors $\alpha_E$ and $\alpha_L$ representing the relationship in weighting between economical efficiency and LCA data, which are parameters determined by the user's consciousness. The weighted $\alpha_E$ and $\alpha_L$ may be simply represented by numeral value but may be represented together with a graphic illustrating the balance of numeral value therebetween. Shown by way of example in this figure is display of balance of numeral value using a graphic imitating a balance that swings down on the side whichever of $\alpha_E$ or $\alpha_L$ the gravity of judgment is heavier. The user can make intuitive grasping of on which gravity should be put the electric power generation cost or LCA by visually observing this graphic. The form of the graphic may be such that the economical efficiency and LCA data, which cannot inherently be simply compared with each other, can be compared with each other as parameter by the weighted factors $\alpha_E$ and $\alpha_L$, which can be intuitively set by the user, and is a balance herein, but the displaying method is not necessarily limited thereto. Other displaying methods such as circle graph may be used so far as the gravity of judgement of economical efficiency and LCA data can be intuitively grasped.

When the user makes inputting to the user interface portion 20 for the selection taking into account economical efficiency and LCA data, an operating device selection data is produced according to the selection. As a result, the operation scheduling portion 12 determines the operation schedule of the fuel cell 1 by the operating device selection data from the user interface portion 20.

The operation schedule as shown in Fig. 13 is displayed in a form corrected with LCA data. A specific example of the selection of various electric power generating means taking into account the economical efficiency and LCA data will be described in detail in the mode 2 for carrying out the invention.

Subsequently, the controlling portion 11 controls the fuel cell 1 according to the operation schedule determined by the operation scheduling portion 12, obtains the current time from the timer 18 and controls the electric power output of the fuel cell 1 or operates the switch 30, making it possible to realize the optimum use of the fuel cell 1 taking into account environmental protection.

The operation schedule once obtained may be stored in the operation scheduling portion 12a as a living pattern and may be later displayed on the user interface portion 20 as a reference by which the user can judge to set the future system operation.

As mentioned above, the arrangement of the present embodiment of implementation of the invention makes it possible to always make comparison of LCA assessment of the power plant 50 of electric power company and dispersed electric power generating apparatus of other electric power generating industries in addition to the electric power rate unit cost in the case where electricity is bought from these electric power generating means and the electric power generation unit cost of the fuel cell 1. In this manner, the operation schedule can be realized taking into account LCA rather than determining the operation of the fuel cell system only from an economical standpoint, making it possible to always provide a commercial value that is the user's satisfaction in environmental contribution and a fuel cell system that can sufficiently make contribution also from the standpoint of global environmental protection.

The example shown in Fig. 2(a) has been described on the assumption that LCA data is fixed within 24 hours, but when the fuel cell 1, the power plant 50 or the like operates, LCA data actually varies with the amount of electric power generated during the operation. On the other hand, in the user interface portion 20, real time display of LCA data, including this variation, may be conducted. Alternatively, LCA data may be once displayed as a fixed value and then corrected and displayed every predetermined period such as hour and time zone. As this display there may be used a graphic of living pattern shown in Fig. 13.

In the aforementioned embodiment of implementation of the invention, the user interface portion 20 displays all the electric power generation cost, the external electric power cost and LCA data as fresh data. However, either the results of comparison of the electric power generation cost with the external electric power cost or the results of comparison of first LCA data of the fuel cell 1 and house with second LCA data of the power plant 50 and the dispersed electric power generating apparatus 51 among LCA data arepreviously calculated, and the user interface portion 20 may display the results of comparison and data which have not been subj ected to comparison.

In Fig. 3, another configuration of the present embodiment of implementation of the invention is shown. The difference between the controlling device 10 of Fig. 1 and the controlling device 10' of Fig. 3 is that the controlling device 10' comprises a cost comparing means 19 of comparing the external electric power cost with the electric power generation cost. When obtaining the external electric power cost from the electric rate system storing portion 14 or the electric power generation cost from the electric power generation unit cost calculating portion 13, the cost comparing means 19 compares the two costs and then outputs the results of comparison to the user interface portion 20.

As shown in Fig. 2(b), the user interface portion 20 displays the results of comparison of the various electric power generating means A to C as "cost comparison" in addition to the electric power generation unit cost and LCA data' shown in Fig. 2(a).

In this manner, the user can save trouble of comparing the electric power generation unit cost of the various electric power generating means and thus can set the operation schedule more easily. The previous display of the results of comparison is effective particularly when there are so many external electric power generation industries that it is difficult to find which of the electric generating means can provide electricity at low cost at a glance.

Fig. 3 has been described on the assumption that the comparing means 19 compares the external electric power cost with the electric power generation cost. However, the comparing means 19 may compare first LCA data with second LCA data among LCA data and display the results of the comparison on the user interface portion 20 as "LCA comparison". Alternatively, both the cost comparison and LCA comparison may be displayed. In this case, the comparing means 19 may perform comparison and judgment of the aforementioned economical efficiency and LCA data using the weighted factors $\alpha_L$ and $\alpha_E$.

Concerning the data which have been subjected to comparison, only the results of comparison may be displayed and the display of the data themselves may be omitted.

The aforementioned configuration has been describedwith reference to the case where the fuel cell system comprises the fuel cell 1, the power plant 50 and the dispersed electric power generating apparatus 51 to supply electric power by way of example, but the dispersed energy supplying system of the present invention may be a system which supplies energy other than electric power. Several examples will be described below.

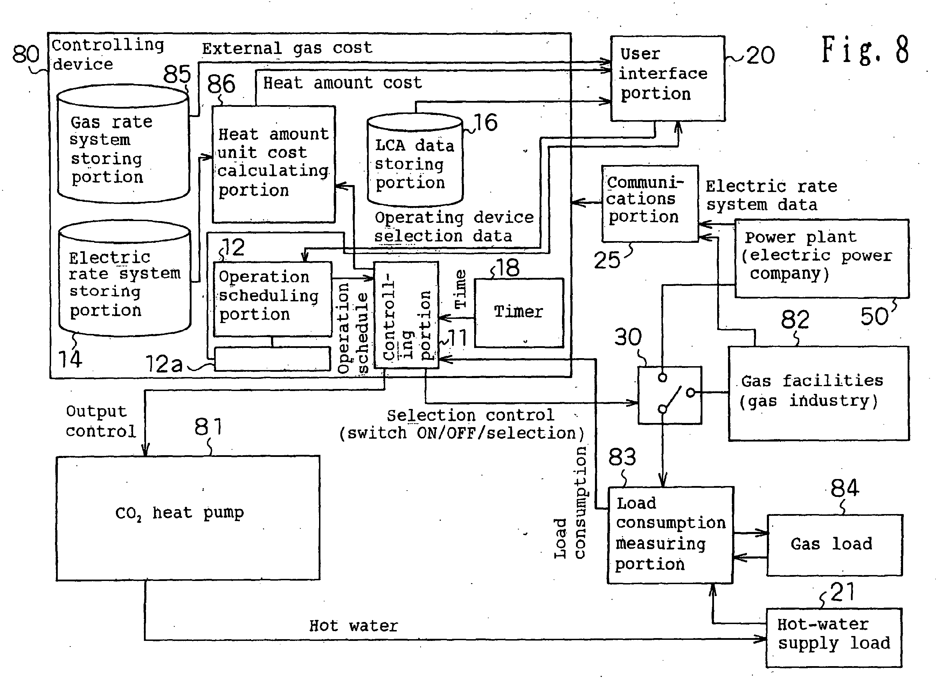

Fig. 8 is a constitutional diagram illustrating a heat supply system according to another constitution of the first embodiment of implementation of the present invention and a controlling device therefor. In Fig. 8, where the parts are the same as or correspond to those of Fig. 1, the same reference numerals are used and their detaileddescription will be omitted, $CO_2$ heat pump 81 is a means installed at houses which operates by an electric power from the power plant 50 to perform' heat exchange, allowing the supply of heat and optionally cold heat carried by a cooling medium such as water and/or $CO_2$ gas. The gas facilities 82 are industries which provide and sell gas to houses and the load consumption measuring portion 83 is a means of measuring the amount of gas consumed by the gas load 84 which is a device that uses gas to operate and the amount of heat consumed by the hot-water supply load 21.

The controlling device 80 having the present constitution is different from the controlling device 10 in that it comprises a gas rate system storing portion 85 of storing the gas rate unit cost of the gas facilities 82 and a heat amount unit cost calculating portion 86 instead of the fuel gas rate system storing portion 1 of the fuel cell 1. The heat amount unit cost calculating portion 86 has a performance table which provides the energy efficiency of $CO_2$ heat pump 81 represented by the electric power and hot-water supply efficiency during operation and calculates the heat amount unit cost which is the cost required for $CO_2$ heat pump 81 to supply unit amount of heat.

The operation of the present embodiment of the heat supply system having such a constitution is as follows. The case where either the gas load 84 capable of heating water or the hot-water supply load 21 capable of supplying hot water directly into the bath can be utilized to prepare the bath of houses is used by way of example. As in the case of the operation of the fuel cell system, the gas rate system is obtained from the gas rate system storing portion 85, the unit cost of heat amount of the gas facilities 82 is calculated from the unit cost of gas, and it is then outputted to the user interface portion 20 as an external gas cost. At present, the unit cost of gas does not vary from time zone to time zone in one day and there is thus only one unit cost of gas used to determine the operation schedule of the gas facilities.

On the other hand, the electric power generation unit cost of the power plant 50 stored in the electric rate system storing portion 14 is read out to the heat amount unit cost calculating portion 86. Further, the load consumption measuring portion 83 measures the amount of heat consumed by the hot-water supply load 21 and then outputs it to the heat amount unit cost calculating portion 86 through the controlling portion 11. The heat amount unit cost calculating portion 86 calculates the unit cost of heat amount of $CO_2$ heat pump 81 on the basis of the electric power generation unit cost and the load consumption measuring portion 83 thus obtained. In this case, the energy efficiency of $CO_2$ heat pump 81 may be the amount obtained on the basis of the rating of the previously prepared $CO_2$ heat pump 81 or may be calculated from the electric power consumed by $CO_2$ heat pump 81 and the load consumption measured by the load consumption measuring portion 83. Further, since the electric rate from the power plant 50 which operates $CO_2$ heat pump 81 varies from time zone to time zone, the unit cost corresponding to operation time zone is used.

The unit cost of heat amount thus obtained is then outputted to the user interface portion 20 as a heat amount cost.

The external gas cost and the heat amount cost correspond to the external electric power generation cost and the electric power generation cost in the fuel cell system, respectively. The user can obtain these data concerning economical efficiency from the user interface portion 20 and LCA data of the $CO_2$ heat pump 81 and gas facilities 82 obtained from the LCA data storing portion 16 and make comparison and study of them. As a result of study, the user can operate either the gas load 84 or the hot-water supply load 21 using a desired means to heat water in the bath.

The inventory assessment and impact assessment which are LCA data of $CO_2$ heat pump during the production and disposal (regeneration) are $CO_2$, discharged amount of heavy metal and warming, and exhaustion of resources, respectively, and examples of the inventory assessment and impact assessment during use include $CO_2$ and warming, respectively.

The load consumption measured by the load consumption measuring portion 83 may be outputted to the heat amount unit cost calculating portion 86 as it is in the form of measured value because the gas load 84 and the hot-water supply load 21 operate on the same obj ect ("heating water in the bath" herein), but the gas load 84 and the hot-water supply load do not always perform operation on the same object, for the same purpose and in the same operation pattern (the same living pattern of the user). In this case, it is necessary to specify the load consumption measuring portion 83 so that the load consumption of different objective loads can be compared according to the same criterion by previously referring to energy efficiency, e.g., from the operation history of the gas load 84 and the hot-water supply load 21 (e.g., referring to living pattern of Fig. 13).

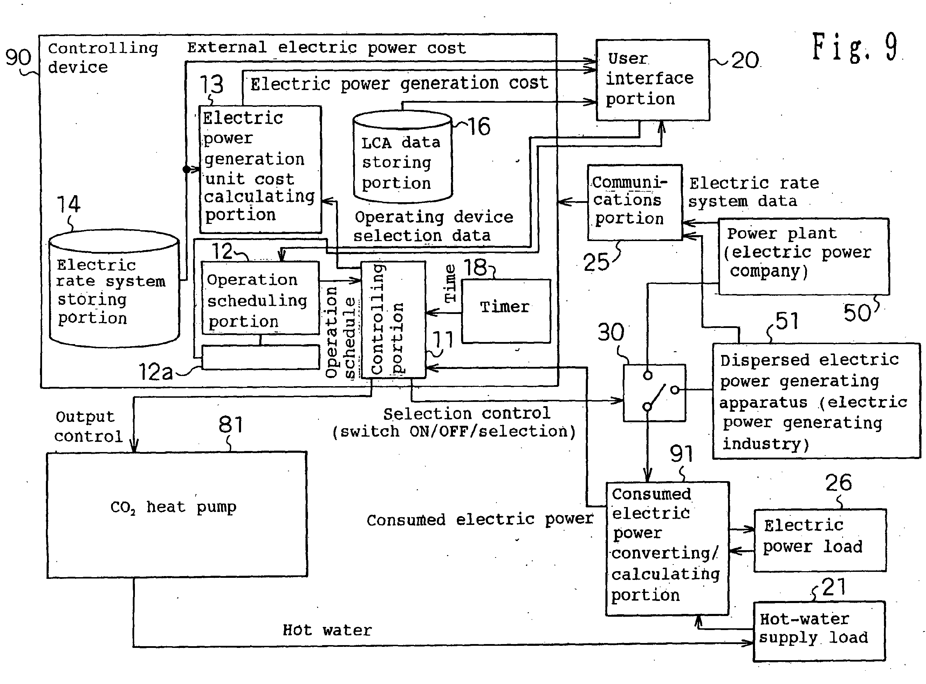

Next, Fig. 9 is a constitutional diagram illustrating a dispersed energy supplying system according to another constitution of the first embodiment of implementation of the present invention and a controlling device therefor. In Fig. 9, where the parts are the same as or correspond to those of Figs. 1 and 8, the same reference numerals are used and their detailed description will be omitted. In the present constitution, the electric power load 26 is operated by either the power plant 50 or the distributed electric power generating apparatus 51 and the hot-water supply load 21 is operated by $CO_2$ heat pump 81. $CO_2$ heat pump 81 can be operated by the electric power supplied from either the power plant 50 or the dispersed electric power generating apparatus 51 but will be described to be operated by the electric power from the power plant 50 hereinafter.

Further, the controlling device 90 having the present constitution is different from the controlling device 10 in that it has no means corresponding to the fuel gas rate system storing portion 1 of the fuel cell 1.

Moreover, the consumed electric power converting/measuring portion 91 is a means of converting the amount of energy consumed by the electric power load 26 and the hot-water supply load 21 to an electric power and outputting it to the controlling portion 11 as consumed amount of electric power.

The operation of the present embodiment of the dispersed energy supplying system having such a constitution is as follows. As in the case of Fig. 8, the case where either the electric power load 26 capable of heating water or the hot-water supply load 21 capable of supplying hot water directly into the bath can be utilized to prepare the bath of houses is used by way of example. For the electric power load 26, an external electric power cost is obtained in the same manner as in the case of the operation of the stationary fuel cell system.

Subsequently, the cost of $CO_2$ heat pump 81 is converted to an electric power generation cost and obtained. The process is as follows. The electric power generation unit cost of the power plant 50 stored in the electric rate system storingportion 14 is read out to the electric power generation unit cost calculating portion 13. Further, the consumed electric power converting/measuring portion 91 measures the amount of heat consumed by the hot-water supply load 21 and then converts it to a consumed amount of electric power. The consumed electric power thus obtained by conversion is outputted to the electric power generation unit cost calculating portion 13 through the controlling portion 11. The electric power generation unit cost calculating portion 13 outputs the electric power unit cost of $CO_2$ heat pump 81 to the user interface portion 20 as electric power generation cost on the basis of the electric power generation unit cost thus obtained and the consumed electric power thus obtained by conversion. The following operation is effected in the same manner as in the case of the fuel cell system of Fig. 1.

As in the case of Fig. 8, the electric power load 26 and the hot-water supply load 21 do not always operate on the same obj ect for the same purpose. In this case, it is necessary to specify the consumed electric power converting/measuring portion 91 so that the load consumption of different objective loads can be compared according to the same criterion by previously referring to energy efficiency, e.g., from the operation history of the electric power load 26 and the hot-water supply load 21 (e.g., referring to living pattern of Fig. 13).

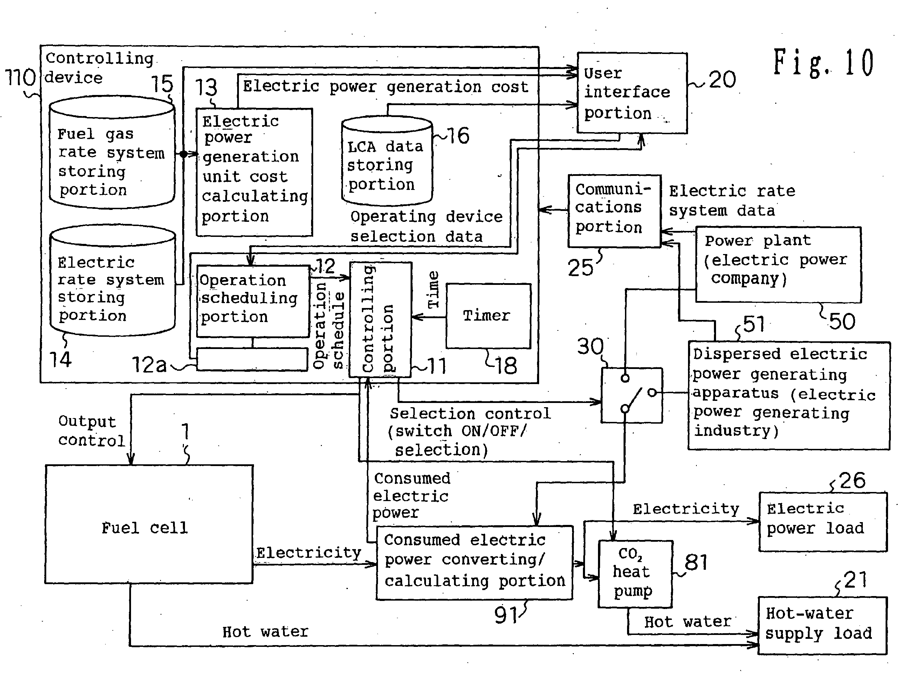

Next, Fig. 10 is a constitutional diagram illustrating a dispersed energy supplying system according to another constitution of the first embodiment of implementation of the present invention and a controlling device therefor. In Fig. 10, where the parts are the same as or correspond to those of Figs. 1, 8 and 9, the same reference numerals are used and their detailed description will be omitted. The dispersed energy supplying system having the present constitution comprises the fuel cell system of Fig. 1 and a $CO_2$ heat pump 81 in combination and causes the hot-water supply load 21 to operate by hot water supplied by the $CO_2$ heat pump 81 or the fuel cell 1.

The operation of such a constitution is effected in the same manner as in the fuel cell system of Fig. 1 and the dispersed energy supplying system, but the electric power generation cost includes the electric power generation cost of the fuel cell 1 and the converted electric power generation cost of the $CO_2$ heat pump 81. Further, the electric power generation cost particularly in the case where the $CO_2$ heat pump 81 is operated by the fuel cell is representedby the total of the aforementioned various electric power generation costs.

(Second embodiment of implementation of the invention)

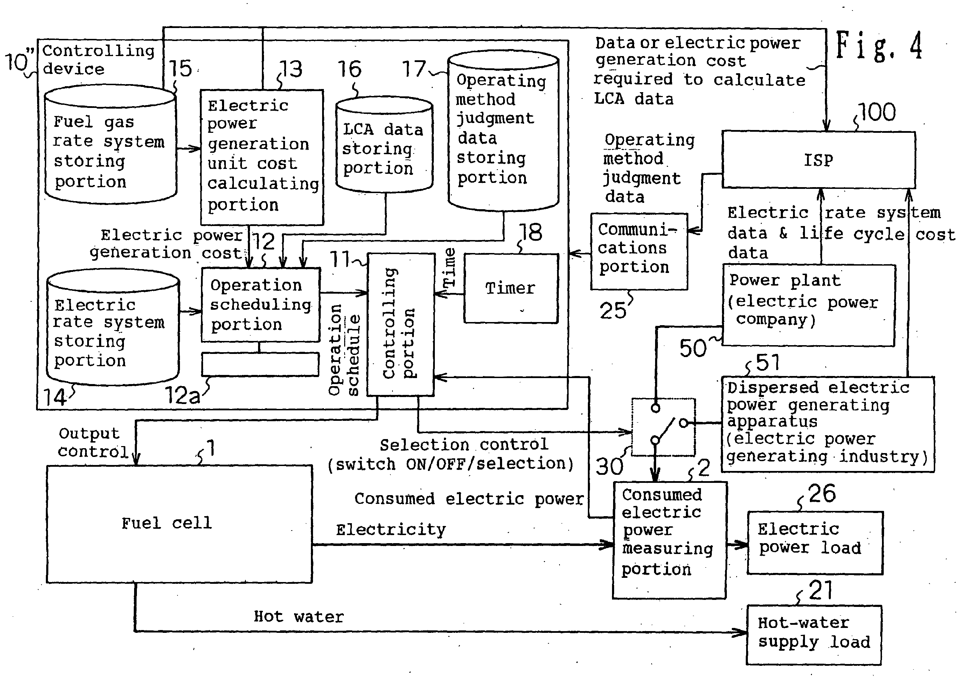

Fig. 4 is a constitutional diagram illustrating a configuration of the controlling device according to the second embodiment of implementation of the present invention. In Fig. 4, where the parts are the same as or correspond to those of Fig. 1, the same reference numerals are used and their detailed description will be omitted. Further, the reference numeral 100 indicates an internet service provider (ISP) which operates to provide data such as electric power rate unit cost in the case where electricity is bought from the power plant 50 of an electric power company or the dispersed electric power generating apparatus 51 of other electric power generating industries and distributes, in addition to these data, an operating method judgment data having an algorithm of forecasting and determining optimum operating method from these data. In the controlling device 10", the operating method judgment data storing portion 17 is a means of retaining once the operating method judgment data transmitted via the communications portion 25.

Next, the operation of the present embodiment of implementation of the invention will be described together with other embodiments of the method of controlling the fuel cell system of the present invention.

In the mode 1 for carrying out the invention, the electric rate system on which the external electric power cost and other data are based and LCA data are previously stored in the controlling device 10. These data are very important data for the determination of optimum operating schedule of the fuel cell 1 according to the cost that varies from time to time. The contents of these data are sometimes renewed, but the data thus renewed are not be easily available to ordinary users.

Further, LCA data are more difficultly available. Moreover, the calculation of LCA data requires a huge amount of data and an operational processing. It is virtually impossible to incorporate a mechanism allowing this processing in the controlling device.

Therefore, the present embodiment of implementation of the invention is arranged such that the electric rate system or LCA data are supplied by ISP100. ISP100 performs service of providing disclosed or presented price data of electric power company or other data about a price of electric supply from the dispersed electric power generating apparatus 51. It is a great advantage for the controlling device 10" to be able to make easy downloading from ISP100 via, e.g., internet to always obtain the recent electric rate system and LCA data. On the other hand, ISP100 has an advantage of collecting data provision fee from users to make a profit.

Incidentally, unlike the example shown in the mode 1 for carrying out the invention, the comparison of LCA data with the electric power generation unit cost is a numeral value that can be difficultly understood by ordinary users and its comparison with economical efficiency can be difficultly understood.

Therefore, ISP100 not only provides these data but also has an intellectual algorithm having a specific judgment criterion on the basis of which optimum operation can be automatically selected from these data, judges which the controlling portion 11 should use among the fuel cell, the power plant 50 and the dispersed electric power generating apparatus 51 on the basis of this algorithm and then transmits the results of judgment to the controlling device 10" as operating method judgment data. This judgment has the same meaning as the selection of various electric power generation means taking into account economical efficiency and LCA data as described in the mode 1 for carrying out the invention.

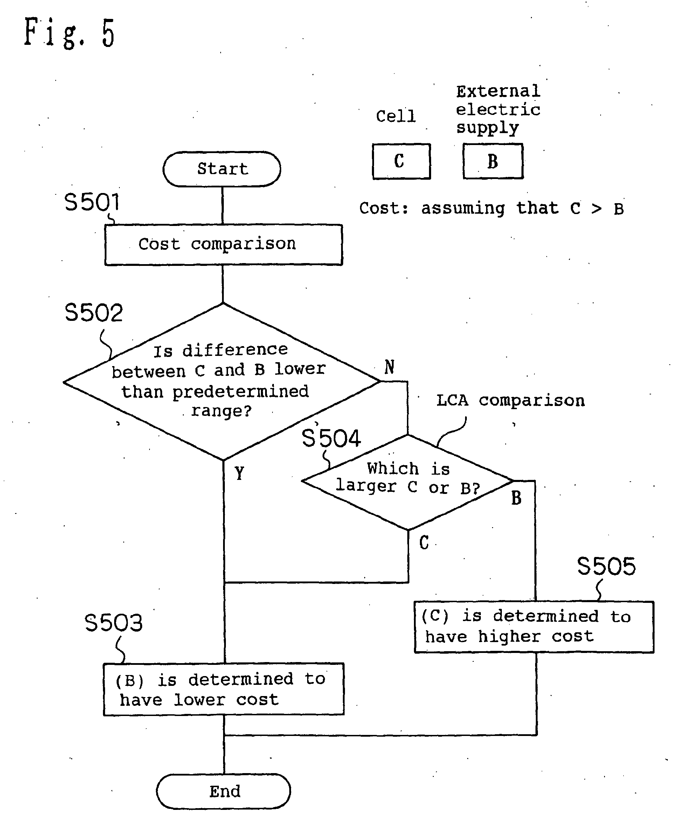

A specific example of the judgment operation of ISP100 will be described in connection with Fig. 5. Fig. 5 is a flow chart illustrating the judgment operation of ISP100.

Firstly, ISP100 obtains from the controlling device 10" data required to calculate LCA data of the fuel cell 1 and calculates LCA data on the fuel cell 1 side on the basis of the data. Further, ISP100 obtains the electric power cost from the electric power generation unit cost calculating portion 13 of the controlling device 10".

Further, ISP100 obtains the electric rate system data and LCA data from the power plant 50 and the dispersed electric power generating apparatus 51, respectively, and calculates the external electric power cost of the power plant 50 and the dispersed electric power generating apparatus 51, respectively. In this case, ISP100 may obtain only required data and calculate LCA data of the power plant 50 and the dispersed electric power generating apparatus 51, respectively, as in the case of the fuel cell 1.

Subsequently, ISP100 compares the electric power generation cost of the fuel cell 1 and the external electric power cost of the power plant 50 and the dispersed electric power generating apparatus 51, respectively (step 501). Taking the electric power generation unit cost (electric power generation cost and external electric power cost) of various electric power generating means in "time zone $\delta$" of Fig. 2 (a) by way of example, the electric power generation unit cost of the electric power generating means A (power plant 50), the electric power generating means B (dispersed electric power generating apparatus 51) and the electric power generating means C (fuel cell 1) are 1,100, 1,000 and 1,100, respectively. Therefore, the electric power generating means B can provide an electric power at a cost lower than the electric power generating means A and the electric power generating means C.

Subsequently, when cost comparison is conducted, ISP100 judges to see if the difference in cost comparison between the electric power generating means C and the electric power generating means A and B falls within a predetermined range (step 502). As a result, if the difference in cost comparison exceeds the predetermined range, the process moves to step 503. If not, the process moves to step 504. In this case, when the predetermined range is defined to be "200", the difference in cost comparison between the electric power generating means C and the electric power generating means B in the case of "time zone $\delta$" of Fig. 2 (a) is 100, which falls within the predetermined range. Thus, the process moves to step 504.

At step 504, ISP1000 compares LCA data of the electric power generating means B with LCA data of the electric power generating means C and judges to see which is greater. If LCA data of the electric power generating means B is greater than LCA data of the electric power generating means C, the process moves to step 505. If LCA data of the electric power generating means C is greater than LCA data of the electric power generating means B, the process moves to step 503. In the case of "time zone $\delta$" of Fig. 2(a), the comparison of LCA data shows that the electric power generating means B has a greater value than the electric power generating means C. Thus, the process proceeds to step 505.

At step 505, upon the reception of the results of comparison of LCA data at step 504, it is determined that the electric power generating means B has a greater index of LCA data and hence a greater environmental burden and thus should not be selected and the electric power generating means C, which is inferior to the electric power generating means C but gives a smaller environmental burden, should be operated.

On the other hand, at step 503, upon the reception of the results of comparison of cost at step 502, it is made obvious that there is a sufficient difference in cost from other electric power generating means. Alternatively, upon the reception of the results of comparison of LCA data at step 504, it is made obvious that although there is no sufficient difference in cost from other electric power generating means, the comparison of LCA data shows that the environmental burden is small. Thus, it is determined that the electric power generating means B should be operated, and this decision is included in the operating method judgment data.

In the case of "time zone $\delta$" of Fig. 2 (a) , the comparison of LCA data shows that the electric power generating means B (dispersed electric power generating apparatus 51) has a greater value than the electric power generating means C (fuel cell 1). Thus, the electric power generating means B is superior to the electric power generating means C in cost but is not selected because LCA comparison shows that it has a great environmental burden. Therefore, the electric power generating means C (fuel cell 1) is finally determined to be the electric power generating means that should be operated.

Thus, in accordance with the algorithm shown in the flow chart of Fig. 5, even if the comparison of the fuel cell with other external electric power generating apparatus shows that the fuel cell is inferior to the others in cost but there is no sufficient difference therebetween, the electric power generating means having a smaller environmental burden can be operated on the basis of the comparison of LCA data, making it possible to automatically realize the operation of the fuel cell system taking into account environmental protection.

The aforementioned flow chart has been described on the assumption that LCA comparison at step 504 is conducted after cost comparison at step 502, but the derivation of the results of comparison of LCA data may be conducted at the time of or before the operation of cost comparison at step 501.

The aforementioned operation has been described on the assumption that the comparison of LCA data is carried out by judging to see if the results of cost comparison shows that the difference falls within a predetermined range, but cost comparison may be conducted when the judgment of earlier comparison of LCA data shows that the difference falls within the predetermined range.

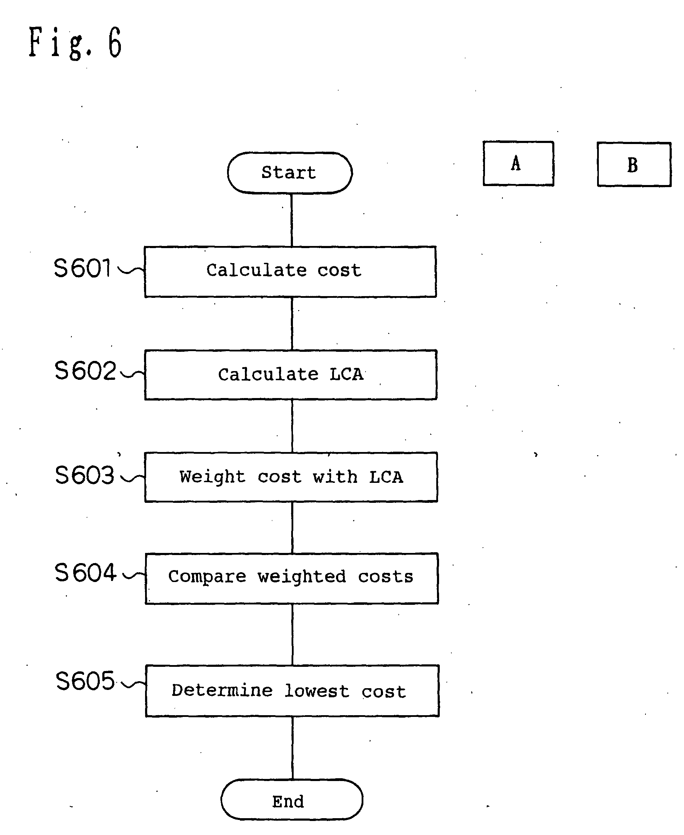

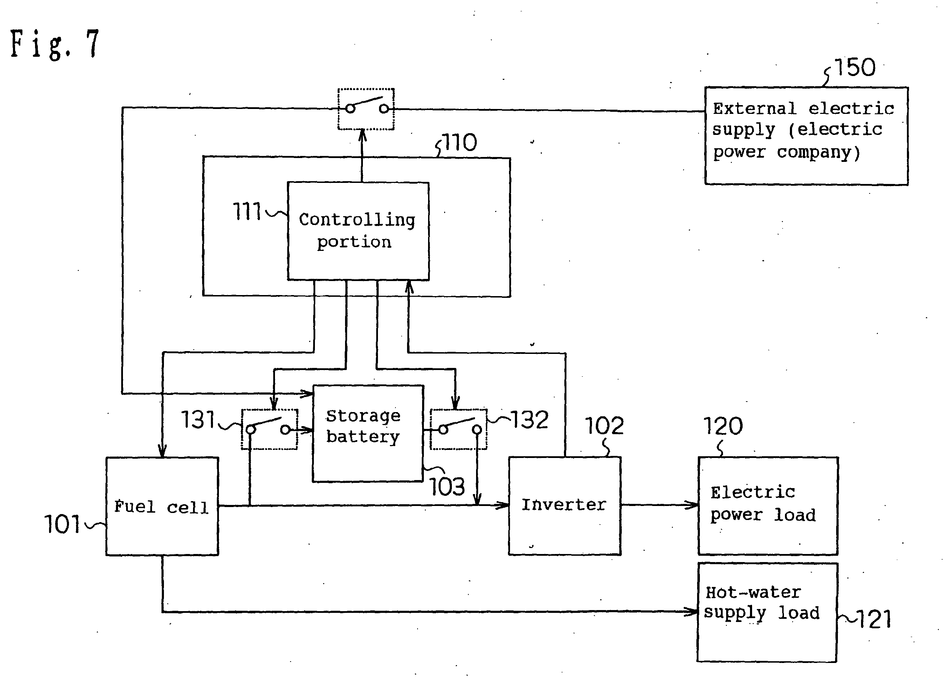

Next, a second example of the operation of judgment of ISP100 will be described in connection with Fig. 6. Fig. 6 is a flow chart illustrating the second example of the operation of judgment of ISP100.

Firstly, ISP100 obtains the electric power generation cost from the electric power generation unit cost calculating portion 13 of the controlling device 10" and obtains the electric rate system data and LCA data from the power plant 50 and the dispersed electric power generating apparatus 51, respectively, and then calculates the external electric power cost of the power plant 50 and the dispersed electric power generating apparatus 51, respectively (step 601).

Next, ISP100 obtains data required for calculating LCA data of the fuel cell 1 (hereinafter referred to as "the first LCA data") from the controlling device 10" and calculates LCA data of the fuel cell 1 side on the basis of the obtained data. Subsequently, ISP100 calculates LCA data of the power plant 50 and the dispersed electric power generating apparatus 51 (hereinafter referred to as "the second LCA data") , respectively (step 602).

Subsequently, ISP100 uses the first LCA data and second LCA data to convert the electric power generation cost of the fuel cell 1 and the external electric power cost of the power plant 50 and the dispersed electric power generating apparatus 51 into values taking into account LCA data (hereinafter referred to as "LCA conversion"), respectively (step 603).

Another specific example of weighting will be described hereinafter. Taking the electric power generation unit cost (electric power generation cost and external electric power cost) of various electric power generating means in "time zone δ" of Fig. 2 (a) by way of example, the electric power generation unit cost and LCA data of the electric power generating means A (power plant 50), the electric power generating means B (dispersed electric power generating apparatus 51) and the electric power generating means C (fuel cell 1) are 1,100, 1,000 and 1,100, respectively, and 120, 110 and 80, respectively. LCA data of the various electric power generating means are normalized.

LCA normalization coefficient of the electric power generating means A is:

$$(\text{expression 1})$$

$$120/(120 + 110 + 80) = 12/31$$

LCA normalization coefficient of the electric power generating means B is:

$$(\text{expression 2})$$

$$110/(120 + 110 + 80) = 11/31$$

LCA normalization coefficient of the electric power generating means C is:

$$(\text{expression 3})$$

$$80/(120 + 110 + 80) = 8/31$$

When the respective electric power generation unit cost is LCA-converted with the various LCA normalization coefficients, LCA-converted electric power generation unit cost of the electric power generating means A is:

$$(\text{expression 4})$$

$$1100 \times 12/31 \cong 425.81$$

LCA-converted electric power generation unit cost of the electric power generating means B is:

$$(\text{expression 5})$$

$$1000 \times 11/31 \cong 354.84$$

LCA-converted electric power generation unit cost of the electric power generating means C is:

(expression 6)

$$1100 \times 8/31 \cong 283.87$$

Subsequently, ISP100 compares the respective LCA-converted electric power generation unit costs (step 604) and then determines that the electric power generating means having the lowest value among these electric power generating means should be operated (step 605). In the case of "time zone $\delta$" of Fig. 2(a), since it can be seen in (suu-4) to (suu-6) that the electric power generating means C (fuel cell 1) has the lowest LCA-converted electric power generation unit cost, ISP100 determines the operation schedule for the operation of the fuel cell 1, and this decision is included in the operating method decision data.

Thus, in accordance with the algorithm shown in the flow chart of Fig. 6, the comparison of the fuel cell with the other external electric power generating apparatus involves the conversion of the respective cost to values taking into account LCA data. Accordingly, the introduction of both economical efficiency and environmental burden as parameter into the comparison of the respective electric power generating means makes it possible to automatically realize the operation of the fuel cell system taking into account environmental protection.

The aforementioned flow chart has been described on the assumption that the calculation of electric power generation unit cost at step 601 is conducted before the calculation of LCA data at step 602, but the order of these steps may be inverted, Alternatively, the calculation of electric power generation unit cost and the calculation of LCA data may be conducted at the same time. Alternatively, as LCA data there may be used ones which have been previously obtained.

The aforementioned operation has been described on the assumption that the cost of the respective electric power generating means are converted with the corresponding LCA data, but the electric generating means may be determined by the comparison of values obtained by converting LCA data of the various electric power generating means taking into account the corresponding cost, i.e., values taking into account LCA data converted with normalized cost coefficients.

The means of determining the operating means in ISP100 is not limited to the examples of Figs. 5 and 6 but may be other algorithms so far as they use electric power generation unit cost and LCA data.

Next, a third example will be described. In the time zone $\alpha$ (0:00 - 6:00) shown in Fig. 2(a), the electric power company corresponding to the power plant 50 (atomic power plant) is given an electric power generation unit cost e1 of 1,000, the electric power industry corresponding to the dispersed electric power generating apparatus 51 (thermoelectric power plant) is given an electric power generation unit cost e2 of 1,000, and the fuel cell 1 is given an electric power generation unit cost e3 of 1,100. Referring to LCA data of the various electric power generating means as impact assessment which is the sum of LCA data during production, use (operation) and disposal (regeneration) , the electric company is given LCA data 11 of 120; the electric power industry is given LCA data 12 of 110, and the fuel cell is given LCA data 13 of 80. Herein, as LCA data on the fuel cell there are given warming and exhaustion of resources, as LCA data on the electric power company there are given warming and atmospheric pollution and as LCA data on the electric power industry there are given warming and atmospheric pollution.

Subsequently, the electric power generation unit costs e1 to e3 of the respective electric power generating means are subjected to nondimensional normalization. The resulting normalized values E1 to E3 are 0.323, 0.323 and 0.354, respectively. Similarly, LCA data 11 to 13 of the respective electric power generating means are normalized. The resulting normalized values L1 to L3 are 0.387, 0.355 and 0.258, respectively.

As a result of the aforementioned operation, data for judgment taking economical efficiency data (electric power generation unit cost) Ei and LCA data Li (i = number of external energies or energy generating means used in the dispersed energy supplying system; i = 1 to 3 in the aforementioned case because it is formed by three electric power generating means) as parameter are obtained concerning the various electric power generating means.

By diving the economical efficiency data (electric power generation unit cost) Ei and LCA data Li by the weighted factors $\alpha_E$ and $\alpha_L$ for economical efficiency and LCA shown in Fig. 12, respectively, data for judgment of the respective electric power generating means are corrected on the basis of the user's consciousness of economical efficiency versus LCA.

For example, if the ratio of the weighted factor $\alpha_E$ to the weighted factor $\alpha_L$ is 0.3 : 0.7, i.e., if the user's consciousness of environment is strong, the data for judgment determined under the aforementioned conditions are $(E1/\alpha_E, L1/\alpha_L) = (0.323/0.7, 0.387/0.7) = (1.076, 0.553)$ for the electric power company.

Similar calculation is conducted on the electric power industry and the fuel cell, and the results are $(E2/\alpha_E, L2/\alpha_L) = (1.076, 0.507)$ and $(E3/\alpha_E, L3/\alpha_L) = (1.180, 0.370)$, respectively.

The user having a strong consciousness of environment can select as electric power generating means the fuel cell including the smallest value of 0.370 as LCA data from these data for judgment.

On the other hand, if the ratio of the weighted factor $\alpha_E$ to the weighted factor $\alpha_L$ is 0.7 : 0.3, i.e., if the user's consciousness of economical efficiency is strong, the data for judgment determined under the aforementioned conditions are (E1/$\alpha_E$, L1/$\alpha_L$) = (0.323/0.7, 0.387/0.3) = (0.461, 1.290) for the electric power company and (E2/$\alpha_E$, L2/$\alpha_L$) = (0.461, 1.183) and (E3/$\alpha_E$, L3/$\alpha_L$) = (0.506, 0.860), respectively, for the electric power industry and the fuel cell.

The user having a strong consciousness of economical efficiency can select as electric power generating means the electric power company or electric power industry including the 'smallest electric power generation unit cost (0.461) from these data for judgment.

As a fourth example there is exemplified a case where the weighted factor $\alpha_E$ and the weighted factor $\alpha_L$ can be freely determined by the user. In other words, the ratio of $\alpha_E$ to $\alpha_L$ is not necessarily always constant.

For example, when the electric power company is an atomic power plant, the impact assessment indicates atmospheric pollution and the inventory assessment which is a parameter of atmospheric pollution indicates the discharged amount of radioactive material. Some users having a sense of crisis against radioactive material may consider these radioactive materials more seriously than $CO_2$ and heavy metal which are inventory assessments included in other impact assessments.

In this case, the user changes the value of the weighted factor $\alpha_L$ for each of the electric power generating means.

Under the third example of conditions, the weighted factor $\alpha_E$ and the weighted factor $\alpha_L$ are constant (0.3 : 0.7) in the various electric power generating means. However, for the aforementioned reason, the weighted factor $\alpha_L$ for the electric power company is determined to be 0. 2 and the weighted factor $\alpha_L$ for the electric power industry and the fuel cell are determined to be 0.7 and 0.4, respectively. Herein, the fuel cell, which discharges heavy metal, is judged to give a more serious environmental effect than the electric power industry, which discharges $CO_2$ and harmful oxides.

When calculation is conducted with such a weighted factor $\alpha_L$ in the same manner as in the first example, the resulting data for judgment of the various electric power generating means are (E1/$\alpha_E$, L1/$\alpha_L$) = (0.323/0.7, 0.387/0.2) = (1.076, 1.935) for the electric power company and (E2/$\alpha_E$, L2/$\alpha_L$) = (1.076, 0.507 (= 0.355/0.7)) and (E3/$\alpha_E$, L3/$\alpha_L$) = (1.180, 0.645 (=0.355/0.4)), respectively, for the electric power industry and the fuel cell. Thus, a judgment can be obtained that'the selection of the electric power industry is desirable from the standpoint of LCA. It has been described that the weighted factor $\alpha_L$ varies with the electric power company, the electric power industry and the fuel cell, but the weighted factor $\alpha_L$ may vary with some of these electric power generating means and remain same with the rest of the electric power generating means.

The criterion for weighting LCA data may be previously predetermined in ISP100, but the weighting of LCA data may be conducted on the basis of the judgment by the user of the fuel cell system 1. In this case, the use of a graphic as shown in Fig. 12 makes it possible for the user to make intuitive weighting.

Further, the weighted factor $\alpha_L$ may be set every impact assessment or inventory assessment so that $\Sigma L_{ij}\alpha L_j$ or $L_{ij}\alpha_{Lj}$ for each of the electric power generating means (i: electric generating means; j : impact assessment or inventory assessment) can be made the use of as a judgment factor from the standpoint of LCA.

Subsequently, the operation data judgment data including decision obtained as in the aforementioned first to fourth examples are inputted from the communications portion 25 to the controlling portion 10" from which they are then received in the operating method judgment data storing portion 17 so that they are allowed to perform in the operation scheduling portion 12 or are stored in the operation schedule 12a. The operation following the controlling portion 11 is the same as in the aforementioned first embodiment of implementation of the invention. Further, the same user interface portion 20 as provided in the modes 1 and 2 for carrying out the invention may be provided so that the operation schedule stored in the operation schedule 12a is displayed as a living schedule or ISP100 displays the operation schedule directly or via the communications portion 25 or the like.

As mentioned above, in accordance with the constitution of the present embodiment of implementation of the invention, the fuel cell 1 can be optimally operated from the standpoint of both economical efficiency and environmental protection, giving ordinary users a great advantage that they can enjoy the operation pattern of the fuel cell system that is automatically tuned up to date. Further, a service of providing data such as LCA data, operating method judgment data and the like can be promoted.

The aforementioned judgment operation by ISP100 may be made by the controlling portion 11.

The aforementioned description has been made on the assumption that the constitution of the system comprising a controlling device incorporated therein is based on the fuel cell system shown in Fig. 1 of the mode 1 for carrying out the invention, but it may be based on the various systems comprising the controlling device of the dispersed energy supplying system of the present invention shown in Figs. 8 to 10.

(Third embodiment of implementation of the invention)

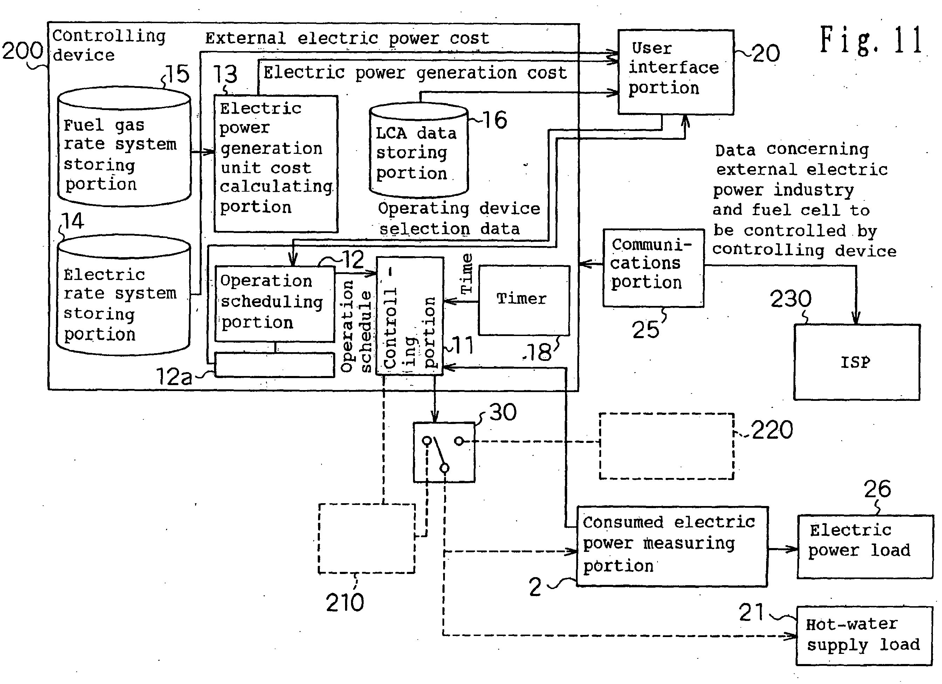

Fig. 11 is a constitutional diagram illustrating a configuration of the controlling device according to the third embodiment of implementation of the present invention. In Fig. 11, where the parts are the same as or correspond to those of Figs. 1 and 4, the same reference numerals are used and their detailed description will be omitted.

The present embodiment of implementation of the invention comprises a controlling device 200 and a switch 20, the controlling device 200 not being supplied from the fuel cell or external electric power, and a switch 30 can be supplied with electric power from a fuel cell 210 which can be connected thereto in the future or an electric power industry 220 which can be contracted in the future but is shown having nothing connected thereto at present.

The internet service provider (ISP) 230 operates to provide data such as electric power rate unit cost charged when electricity is bought from the power plant 50 of the electric power company or the dispersed electric power generating means 51 of other electric power industries as well as data concerning the fuel cell 210 which can be connected.

Next, the operation of the aforementioned embodiment of implementation of the invention will be described together with other embodiments of implementation of the method of setting the dispersed energy supplying system of the present invention.

In the mode 1 for carrying out the invention, the external electric power and fuel cell have been previously incorporated in the system, and the electric rate system on which the external electric power cost and other data are based and LCA data have been merely used to select these means incorporated therein.

However, in order to know what means of building a fuel cell system can be used to satisfy both economical efficiency and LCA, users who are going to build such a fuel cell system could not do nothing but make previous research by themselves or have some advice from the trader.

Further, when users who have a fuel cell system at present continue to use the prior art external electric power or fuel cell despite the appearance of fuel cells or electric power industries having an excellent economical efficiency and LCA due to technical development in the future, it not only is an economic disadvantage but also gives no environmental advantage.

Therefore, the present embodiment of implementation of the invention is arranged such that the up-to-date data concerning excellent fuel cells are supplied from ISP230 into the electric rate system and LCA data as necessary.

ISP230 performs service of providing price data disclosed or provided by electric power company and data of electric supply cost from other dispersed electric power generating apparatus 51 as well as merchandise data concerning the fuel cell connectable to the switch 30. Unlike the first and second embodiment of implementation of the invention, the small electric power measuring portion 2 in the present embodiment of implementation of the invention cannot know the actual amount of electric power consumed by means such as fuel cell 1 which supplies electric power into the electric power load 26 or the hot-water supply load 21. Thus, in order to calculate the electric power cost, the electric power generation unit cost calculating portion 13 performs calculation on the basis of merchandise data from ISP230.

The controlling device 200 has a great advantage of always obtaining data concerning up-to-date fuel cells from ISP230. Further, the user is able to utilize the merchandise data provided by ISP230 upon renewal or even make on-line purchase of fuel cells data of which have been provided via the user interface portion 20.

On the other hand, ISP230 has an advantage of collecting data provision fee from the user and the trader of the fuel cell 210 to make a profit.

As mentioned above, the arrangement of the present embodiment of implementation of the invention makes it possible to build a fuel cell system comprising a fuel cell and an external electric power in a proper combination from the standpoint of both economical efficiency and environmental protection.

Ordinary users have a great advantage of automatically enjoying data concerning the ideal constitution of fuel cell system.

The aforementioned description has been made on the assumption that the constitution of the system comprising a controlling device incorporated therein is based on the fuel cell system shown in Fig. 1 of the mode 1 for carrying out the invention, but it may be based on the various systems comprising the controlling device of the dispersed energy supplying system of the present invention shown in Figs. 8 to 10 incorporated therein. In other words, the merchandise data provided by ISP230 are not limited to fuel cells but may be $CO_2$ heat pump, gas turbine electricity generator, etc. They may be data for introducing electric power industries or gas industries.

The present embodiment of implementation of the invention may be combined with the second embodiment of implementation of the invention. In this case, what combination of means can build the system ideally making an ideal satisfaction of economical efficiency and LCA can be automatically known.

In the aforementioned various embodiments of implementation of the invention, the controlling portion 11 and the operation scheduling portion 12 each are an example of setting means of the present invention. The operation schedule storingportion 12a is an example of the means of storing the contents of setting of the present invention. LCA data storing portion 16 is an example of LCA data storing means of the present invention. The user interface portion 20 is an example of the interface means of the present invention. The comparing means 19 is an example of the comparing means of the present invention. ISP100 and 260 each are an example of the setting means of the present invention. The fuel gas rate system storing portion 15 is an example of the energy source rate system storing means of the present invention and the electric generation unit cost calculating portion 13 and the heat amount unit cost calculating portion 86 each are an example of the external energy supply rate calculating means of the present invention. The electric rate system storing portion 14 and the gas rate system storing portion 85 each are an example of the external energy rate system storing means and the consumed electric power measuring portion 2, the load consumption measuring portion 83 and the consumed electric power converting/measuring portion 91 each are an example of the consumed energy measuring means of the present invention. The power plant 50 and the dispersed electric power generating apparatus 51 each are an example of the facilities of supplying external energy of the present invention. LCA data of the fuel cell 1 and $CO_2$ heat pump 81 each are an example of the first LCA data of the present invention. LCA data of the power plant 50, the dispersed electric power generating apparatus 51 and the gas facilities 82 each are an example of the second LCA data of the present invention. The unit cost of electric generation of the fuel cell 1 and $CO_2$ heat pump 81 and the unit heat cost of $CO_2$ heat pump 81 each are an example of the energy generation cost of the present invention and the unit cost of electric generation of the power plant 50 or the dispersed electric power generating apparatus 51 and the unit cost of heat amount of the gas facilities each are an example of the external energy supply cost of the present invention. The electric power load 26, the hot-water load 21 and the gas load 84 each are an example of the load of the present invention.

However, the present invention is not limited to the aforementioned embodiments of implementation of the invention. The aforementioned embodiments of implementation of the invention have been described on the assumption that the fuel cell 1 supplies electricity into the electric power load and heat thus generated into the hot-water supply load as hot water, but the present invention may be used for a fuel cell which supplies only electricity. The energy generating means of the present invention may be the aforementioned fuel cell, $CO_2$ heat pump and gas turbine electricity generator as well as solar electricity generator,terrestrialheat electricity generator, wind power electricity generator and so on. The external energy of the present invention is not limited to gas and electricity but may be heavy oil, kerosine, etc.

LCA data have been described on the assumption that data at various steps of production, operation and disposal of the fuel cell system or the power plant 50, the dispersed electric power generating apparatus 51, etc. are generated as data, but LCA data of the present invention do not need to be entirely used as data but may be partly used. For example, LCA data may be obtained from only data at the steps of production and operation. Alternatively, LCA data may be generated from data at the steps of operation and disposal.

ISP100 and 260 have been described as provider on internet, but the selecting/determining means of the present invention may be connected to and operated on LAN or intranet other than internet so far they are servers on network.

The present invention is a program of allowing a computer to execute the function of all or some of means (or devices, elements, circuits, portions, etc.) of the apparatus of setting the aforementioned dispersed energy supplying device of the present invention which operates in cooperation with the computer.

The term "some means of the present invention (or devices, elements, circuits, portions, etc.)" and "some steps of the present invention (or steps, operations, actions, etc.)" as used herein are meant to indicate some of a plurality of these means or steps or some functions or operations in one means or step.

Recording media having the program of the present invention recorded therein which can be read out by a computer are included in the present invention.

An embodiment of utilization of the program of the present invention may be one which allows recording on a recording medium which can be read out by a computer and operation in cooperation with the computer.

An embodiment of utilization of the program of the present invention may be one which allows transmission through a transmission medium, reading by a computer and operation in cooperation with the computer.

Examples of the data structure of the present invention include data base, data format, data table, data list, and data type.

Examples of the recording media include ROM, etc. and examples of the transmission media include internet, transmission mechanism such as optical fiber, light, electric radiation, sound wave, etc.

The aforementioned computer of the present invention is not limited to sheer hard wares such as CPU but may include farm ware, OS and peripheral equipment.

As mentioned above, the constitution of the present invention may be realized on a soft ware basis or on a hard ware basis.

Industrial Applicability

As can be seen in the aforementioned description, the present invention can always compare LCA data as in the case of cost at the generation of energy and realize the consideration of LCA as well in the setting of the system rather than by its economical efficiency alone, making it possible to make sufficient contribution from the standpoint of protection of global environment as well.

Further, the dispersed energy supplying system is automatically allowed to operate optimally taking into account both economical efficiency and environmental protection.

## Claims

1. An apparatus of setting a dispersed energy supplying system of supplying a generated energy generated from a predetermined energy source by an energy generating means and an externally supplied external energy into a load, comprising:

   an energy generation cost calculating means of calculating energy generation cost required to generate the generated energy by the energy generating means suitable for the load;

   an external energy supply cost calculating means of calculating supply cost of the external energy suitable for the load;

   an LCA data storage means of storing an environmental burden generated at whole or part of the steps of producing, operating and discarding the energy generating means as a first life cycle assessment (LCA) data and an environmental burden generated at whole or part of the steps of producing, operating and discarding facilities of supplying the external energy as a second LCA data; and

   a setting means of setting the energy generating means and/or the external energy supplying system on the basis of at least one of the group consisting of the energy generation cost and first LCA data and the external energy supply cost and second LCA data.

2. The apparatus of setting a dispersed energy supplying system according to Claim 1, wherein there further comprises a set content storage means of storing the contents of setting and said interface means or said setting means is capable of displaying the stored contents of setting.

3. The apparatus of setting a dispersed energy supplying system according to Claim 1, wherein said setting is to select which of the energy generating means or the external energy is used to supply energy into the load in the operation of the dispersed energy supplying system.

4. The apparatus of setting a dispersed energy supplying system according to Claim 1, wherein said setting is to select which one of a plurality of the energy generating means is used to supply energy into the load in the operation of the dispersed energy supplying system.

5. The apparatus of setting a dispersed energy supplying system according to Claim 1, wherein said setting is to select which one of a plurality of the external energies is supplied into the load in the operation of the dispersed energy supplying system.

6. The apparatus of setting a dispersed energy supplying system according to Claim 1, wherein said setting is to select the energy generating means or the external energy capable of supplying energy into the load in the construction of the distributed energy supplying system.

7. The apparatus of setting a dispersed energy supplying system according to Claim 1, wherein said setting is to select the energy generating means capable of supplying energy into the load in the construction of the dispersed energy supplying system.

8. The apparatus of setting a dispersed energy supplying system according to Claim 1, wherein said setting is to select the external energy capable of supplying energy into the load in the construction of the dispersed energy supplying system.

9. The apparatus of setting a dispersed energy supplying system according to Claim 1 , wherein said setting means performs at least one of the comparison of the energy generation cost and/or the external energy supply cost and the comparison of the first LCA data and/or the second LCA data, and then performs said setting, if one of two comparisons shows a difference falling within a predetermined range, on the basis of the results of the other, or, if the difference of the comparison exceeds the predetermined range, on the basis of the difference of the comparison.

10. The apparatus of setting a dispersed energy supplying system according to Claim 1, wherein said setting means performs at least one of the comparison of the energy generation cost and/or the external energy supply cost and the comparison of the first LCA data and/or the second LCA data, converts the other data which have not been subjected to comparison according to a predetermined coefficient based on the comparison, performs the comparison of the data thus converted, and then performs said setting on the basis of the results of the comparison.

11. The apparatus of setting a dispersed energy supplying system according to Claim 1, wherein said setting means performs the comparison of the energy generation cost and/or the external energy supply cost with the first LCA data and/or the second LCA data upon reception of a weighted factor determined by the user.

12. The apparatus of setting a dispersed energy supplying system according to Claim 11, wherein the weighted factor can be the same for a plurality of LCA data or respectively different for whole or part of the plurality of LCA data.

13. The apparatus of setting a dispersed energy supplying system according to Claim 10 or 11, wherein said setting means determines the weighted factor on the basis of the comparison.

14. The apparatus of setting a dispersed energy supplying system according to Claim 1, which further comprises an LCA data calculating means of calculating the first LDA data and the second LCA data.

15. The apparatus of setting a dispersed energy supplying system according to Claim 13, wherein said external energy supply cost calculating means and said LCA data calculating means are provided in a server on a network.

16. The apparatus of setting a dispersed energy supplying system according to Claim 1, wherein said setting means is provided in a server on a network.

17. The apparatus of setting a 'dispersed energy supplying system according to Claim 1, further comprising an energy consumption measuring means of measuring the energy consumption of the load, wherein said energy generation cost calculatingmeans comprises an energy source rate system storing means of storing the rate system of the predetermined energy source and an energy generation unit cost calculating means comprising a performance table containing data of the energy generating means concerning the capacity of generating energy per unit amount of the predetermined energy source which obtains an energy source unit rate from the energy source rate system storing means and calculates the unit cost per unit energy generation of the energy generating means by reference to the performance table, and said external energy supply cost calculating means comprises an external energy rate system storing means of storing the rate system of the external energy.

18. The apparatus of setting a dispersed energy supplying system according to Claim 1, wherein the energy generating means is a fuel cell.

19. The apparatus of setting a dispersed energy supplying system according to Claim 1, wherein the energy generating means is a $CO_2$ heat pump.

20. The apparatus of setting a dispersed energy supplying system according to Claim 1, wherein the external energy contains at least an electric power supplied by an electric power industry.

21. The apparatus of setting a dispersed energy supplying system according to Claim 1, wherein the external energy contains at least gas supplied by a gas industry.

EP 1 482 616 A1

# Fig. 1

Controlling device 10

External electric power cost

Electric power generation cost

User interface portion 20

15 Fuel gas rate system storing portion

13 Electric power generation unit cost calculating portion

16 LCA data storing portion

25 Communications portion — Electric rate system data

Operating device selection data

14 Electric rate system storing portion

12 Operation scheduling portion

Operation schedule 12a

11 Controlling portion

Time

18 Timer

30

Power plant (electric power company) 50

51 Dispersed electric power generating apparatus (electric power generating industry)

Output control

1 Fuel cell

Selection control (switch ON/OFF/selection)

Consumed electric power

Electricity

2 Consumed electric power measuring portion

26 Electric power load

Hot water

21 Hot-water supply load

## Fig. 2(a)

| Time zone | | Electric power generating means | Title | Electric power generation unit cost | LCA data |
|---|---|---|---|---|---|
| α | 0:00 | A | Electric power company | 1000 | 120 |
| | – | B | Electric power generating industry | 1000 | 110 |
| | 6:00 | C | Fuel cell | 1100 | 80 |
| β | 6:00 | A | Electric power company | 1200 | 120 |
| | – | B | Electric power generating industry | 1300 | 110 |
| | 12:00 | C | Fuel cell | 1100 | 80 |
| γ | 12:00 | A | Electric power company | 1300 | 120 |
| | – | B | Electric power generating industry | 1300 | 110 |
| | 18:00 | C | Fuel cell | 1100 | 80 |
| δ | 18:00 | A | Electric power company | 1100 | 120 |
| | – | B | Electric power generating industry | 1000 | 110 |
| | 0:00 | C | Fuel cell | 1100 | 80 |

## Fig. 2(b)

| Time zone | | Electric power generating means | Title | Electric generation unit cost | Cost comparison | LCA data |
|---|---|---|---|---|---|---|
| α | 0:00 | A | Electric power company | 1000 | C>A,B A = B | 120 |
| | – | B | Electric power generating industry | 1000 | | 110 |
| | 6:00 | C | Fuel cell | 1100 | | 80 |
| β | 6:00 | A | Electric power company | 1200 | B>A>C | 120 |
| | – | B | Electric power generating industry | 1300 | | 110 |
| | 12:00 | C | Fuel cell | 1100 | | 80 |
| γ | 12:00 | A | Electric power company | 1300 | C<A,B A = B | 120 |
| | – | B | Electric power generating industry | 1300 | | 110 |
| | 18:00 | C | Fuel cell | 1100 | | 80 |
| δ | 18:00 | A | Electric power company | 1100 | B<A,C A = C | 120 |
| | – | B | Electric power generating industry | 1000 | | 110 |
| | 0:00 | C | Fuel cell | 1100 | | 80 |

Fig. 3

Controlling device 10'

External electric power cost — 19

User interface portion 20

Electric power generation cost

Fuel gas rate system storing portion 15

Electric power generation unit cost calculating portion 13

LCA data storing portion 16

Operating device selection data

Communications portion 25

Electric rate system data

Power plant (electric power company) 50

Electric rate system storing portion 14

Operation scheduling portion 12

Operation schedule 12a

Controlling portion 11

Time

Timer 18

Dispersed electric power generating apparatus (electric power generating industry) 51

30

Output control

Fuel cell 1

Selection control (switch ON/OFF/selection)

Consumed electric power

Consumed electric power measuring portion 2

Electric power load 26

Electricity

Hot water

Hot-water supply load 21

EP 1 482 616 A1

# Fig. 4

Controlling device 10"

- Fuel gas rate system storing portion 15
- Electric power generation unit cost calculating portion 13
- LCA data storing portion 16
- Operating method judgment data storing portion 17
- Electric rate system storing portion 14
- Operation scheduling portion 12 / 12a
- Controlling portion 11
- Timer 18
- Communications portion 25

Electric power generation cost

Data or electric power generation cost required to calculate LCA data

ISP 100

Operating method judgment data

Electric rate system data & life cycle cost data

Power plant (electric power company) 50

Dispersed electric power generating apparatus (electric power generating industry) 51

Output control

Fuel cell 1

Selection control (switch ON/OFF/selection) 30

Consumed electric power

Electricity

Consumed electric power measuring portion 2

Electric power load 26

Hot water

Hot-water supply load 21

EP 1 482 616 A1

# Fig. 5

Cell

External electric supply

| C | B |

Cost: assuming that C > B

Start

S501

Cost comparison

S502

Is difference between C and B lower than predetermined range?

N

Y

LCA comparison

S504

Which is larger C or B?

B

C

S505

(C) is determined to have higher cost

S503

(B) is determined to have lower cost

End

# Fig. 6

```
                    ┌──────────┐
                    │  Start   │
                    └──────────┘
                         │
S601 ─┐  ┌─────────────────────────────┐
      └──│      Calculate cost         │
         └─────────────────────────────┘
                         │
S602 ─┐  ┌─────────────────────────────┐
      └──│      Calculate LCA          │
         └─────────────────────────────┘
                         │
S603 ─┐  ┌─────────────────────────────┐
      └──│    Weight cost with LCA     │
         └─────────────────────────────┘
                         │
S604 ─┐  ┌─────────────────────────────┐
      └──│   Compare weighted costs    │
         └─────────────────────────────┘
                         │
S605 ─┐  ┌─────────────────────────────┐
      └──│   Determine lowest cost     │
         └─────────────────────────────┘
                         │
                    ┌──────────┐
                    │   End    │
                    └──────────┘
```

┌─────┐    ┌─────┐
│  A  │    │  B  │
└─────┘    └─────┘

# Fig. 7

**150** External electric supply (electric power company)

**110**

**111** Controlling portion

**131**  **132** Storage battery **103**  **102** Inverter  **120** Electric power load

**101** Fuel cell

Hot-water supply load **121**

Fig. 8

80 Controlling device

External gas cost

85 Gas rate system storing portion

86 Heat amount unit cost calculating portion

Heat amount cost

16 LCA data storing portion

Operating device selection data

User interface portion ~20

Communications portion

25

Electric rate system data

Power plant (electric power company) 82 50

14 Electric rate system storing portion

12 Operation scheduling portion

12a

Operation schedule

11 Controlling portion

Time

18 Timer

30

Gas facilities (gas industry)

Output control

81 CO₂ heat pump

Selection control (switch ON/OFF/selection)

Load consumption

83 Load consumption measuring portion

84 Gas load

21

Hot water

Hot-water supply load

EP 1 482 616 A1

EP 1 482 616 A1

Fig. 9

32

Fig. 10

**Fig. 10**

- 110 — Controlling device
- 15 — Fuel gas rate system storing portion
- 13 — Electric power generation unit cost calculating portion
- Electric power generation cost
- 16 — LCA data storing portion
- Operating device selection data
- 20 — User interface portion
- 25 — Communications portion
- Electric rate system data
- 50 — Power plant (electric power company)
- 51 — Dispersed electric power generating apparatus (electric power generating industry)
- 14 — Electric rate system storing portion
- 12 — Operation scheduling portion
- 12a — Operation schedule
- 11 — Controlling portion
- Time
- 18 — Timer
- 30
- Output control
- 1 — Fuel cell
- Selection control (switch ON/OFF/selection)
- Consumed electric power
- Electricity
- 91 — Consumed electric power converting/calculating portion
- 81 — CO₂ heat pump
- 26 — Electric power load
- Electricity
- 21 — Hot-water supply load
- Hot water

EP 1 482 616 A1

33

Fig. 11

## Fig. 12

Economical efficiency ($\alpha_E$)   LCA ($\alpha_L$)

Consciousness ($\alpha$)

3   ←   7

Screen for comparison of LCA assessment index

| Economical efficiency | | |
|---|---|---|
| A company: electric power company | e1 | E1 |
| B company: electric power generation industry | e2 | E2 |
| C company: fuel cell | e3 | E3 |

| LCA | <Warming assessment> $CO_2$ (I1) | | <Atmospheric pollution> Radioactivity (I2) | | <Exhaustion of resources> Heavy metal (I3) | |
|---|---|---|---|---|---|---|
| A company (electric power company) | I1-1 | L1-1 | I2-1 | L2-1 | I3-1 | L3-1 |
| B company (electric power generation industry) | I1-2 | L1-2 | I2-2 | L2-2 | I3-2 | L3-2 |
| C company (fuel cell) | I1-3 | L1-3 | I2-3 | L2-3 | I3-3 | L3-3 |

## Fig. 13

Screen for monitoring of living pattern

▒▒▒ Air conditioning
/// Hot water supply
▓▓▓ Illumination

Amount used

0    6    12    18    24

EP 1 482 616 A1

## INTERNATIONAL SEARCH REPORT

| International application No. |
| --- |
| PCT/JP03/02588 |

| A. CLASSIFICATION OF SUBJECT MATTER |
| --- |
| Int.Cl⁷ H02J3/38, H02J3/46, H01M8/00, H01M8/04 |

According to International Patent Classification (IPC) or to both national classification and IPC

| B. FIELDS SEARCHED |
| --- |
| Minimum documentation searched (classification system followed by classification symbols) |
| Int.Cl⁷ H02J3/38, H02J3/46, H01M8/00, H01M8/04 |

Documentation searched other than minimum documentation to the extent that such documents are included in the fields searched

| Jitsuyo Shinan Koho | 1922–1996 | Toroku Jitsuyo Shinan Koho | 1994–2003 |
| --- | --- | --- | --- |
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| P,X | JP 2002-112458 A (Hitachi, Ltd.), 12 April, 2002 (12.04.02), Full text; Figs. 1, 7 (Family: none) | 1-3,5,9,10, 13-16,20 |
| P,Y | 12 April, 2002 (12.04.02), Full text; Figs. 1, 7 (Family: none) | 4,17,18 |
| Y | JP 2000-045869 A (Hitachi, Ltd.), 15 February, 2000 (15.02.00), Full text; Figs. 5, 12 (Family: none) | 1-8,16-21 |
| Y | JP 2002-007523 A (Osaka Gas Co., Ltd.), 11 January, 2002 (11.01.02), Par. Nos. [0007] to [0013] (Family: none) | 1-8,16-21 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 May, 2003 (06.05.03) | 20 May, 2003 (20.05.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**EP 1 482 616 A1**

## INTERNATIONAL SEARCH REPORT

| International application No. |
|---|
| PCT/JP03/02588 |

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2001-295700 A (Shin'ya OBARA) 26 October, 2001 (26.10.01), Par. Nos. [0006] to [0008] (Family: none) | 1-4,16,18-21 |
| A | JP 2001-273008 A (Osaka Gas Co., Ltd.), 05 October, 2001 (05.10.01), Par. No. [0019]; Fig. 1 (Family: none) | 1-4,16,18-21 |
| A | JP 10-180232 A (Mitsubishi Electric Corp.), 07 July, 1998 (07.07.98), Par. No. [0037] (Family: none) | 1-21 |

Form PCT/ISA/210 (continuation of second sheet) (July 1998)

37